# EUROPEAN PATENT APPLICATION

(11) **EP 4 546 926 A1**
(43) Date of publication of application: **30.04.2025**
(21) Application number: 23845378.1
(22) Date of filing: 18.07.2023
(51) Int. Cl.: H04W 74/04

(54) **RA METHOD AND APPARATUS, AND UE, NETWORK-SIDE DEVICE, COMMUNICATION SYSTEM AND READABLE STORAGE MEDIUM**

(30) Priority: 25.07.2022 CN 202210879028
(71) Applicant: Vivo Mobile Communication Co., Ltd., Dongguan, Guangdong 523863 (CN)
(72) Inventor: MO, Yitao, Dongguan, Guangdong 523863 (CN); WU, Kai, Dongguan, Guangdong 523863 (CN)
(74) Representative: Murgitroyd & Company
(86) International application number: PCT/CN2023/107934
(87) International publication number: WO 2024/022166

(57) **Abstract**

This application discloses an RA method and apparatus, a UE, a network side device, a communication system, and a readable storage medium, and belongs to the field of communication technologies. The RA method in embodiments of this application includes: receiving, by a UE, configuration information sent by a network side device, where the configuration information is used to configure at least one of the following: an RA resource corresponding to an RA procedure with Msg1 repetition, and a second RA resource corresponding to a contention-based second RA procedure with Msg1 repetition; and performing, by the UE, Msg1 repetition based on the configuration information; where a contention-free first RA procedure with Msg1 repetition is corresponding to a first RA resource.

## Description

### CROSS-REFERENCE TO RELATED APPLICATIONS

This application claims the priority of Chinese Patent Application No. 202210879028.1 filed in China on July 25, 2022, the entire content of which is hereby incorporated by reference.

### TECHNICAL FIELD

This application belongs to the field of communication technologies, and specifically relates to an RA method and apparatus, UE, a network side device, a communication system, and a readable storage medium.

### BACKGROUND

Currently, after user equipment UE receives random access (Random Access, RA) resource configuration information of an RA procedure sent by a network side device, the UE may select one beam and a preamble (Preamble) associated with the beam, and then send, based on the selected beam and preamble, a first message (Msg1) that carries a preamble index to the network side device. After receiving the Msg1, the network side device may send a Msg2 to the UE, where the Msg2 carries uplink grant information and one preamble index. If the preamble index in the Msg2 is the same as the preamble index carried in the Msg1, the UE considers that the RA procedure is successful. Otherwise, the UE may accumulatively increase a preamble counter by 1, initiate an RA attempt again, select an RA resource again, and send the Msg1.

However, according to the method described above, the RA procedure is less robust because the RA attempt is made again after an RA failure is confirmed.

### SUMMARY

Embodiments of this application provide an RA method and apparatus, UE, a network side device, a communication system, and a readable storage medium, which can resolve a problem that robustness of an RA procedure is relatively poor.

According to a first aspect, an RA method is provided, and applied to a terminal. The method includes: receiving, by UE, configuration information sent by a network side device, where the configuration information is used to configure at least one of the following: an RA resource corresponding to an RA procedure with Msg1 repetition, and a second RA resource corresponding to a contention-based second RA procedure with Msg1 repetition; and performing, by the UE, Msg1 repetition based on the configuration information, where a contention-free first RA procedure with Msg1 repetition is corresponding to a first RA resource.

According to a second aspect, an RA apparatus is provided, including: a receiving module and an execution module; where the receiving module is configured to receive configuration information sent by a network side device, where the configuration information is used to configure at least one of the following: an RA resource corresponding to an RA procedure with Msg1 repetition, and a second RA resource corresponding to a contention-based second RA procedure with Msg1 repetition; and the execution module is configured to perform Msg1 repetition based on the configuration information received by the receiving module; where a contention-free first RA procedure with Msg1 repetition is corresponding to a first RA resource.

According to a third aspect, an RA method is provided, and applied to a network side device. The method includes: sending, by the network side device, configuration information to UE, where the configuration information is used to configure at least one of the following: a first RA resource corresponding to a contention-free first RA procedure with Msg1 repetition, and a second RA resource corresponding to a contention-based second RA procedure with Msg1 repetition; where the configuration information is used by the UE to perform Msg1 repetition.

According to a fourth aspect, an RA apparatus is provided, and the apparatus may include: a sending module, configured to send configuration information to UE, where the configuration information is used to configure at least one of the following: a first RA resource corresponding to a contention-free first RA procedure with Msg1 repetition, and a second RA resource corresponding to a contention-based second RA procedure with Msg1 repetition; where the configuration information is used by the UE to perform Msg1 repetition.

According to a fifth aspect, UE is provided, where the UE includes a processor and a memory, the memory stores a program or instructions capable of running on the processor, and the program or the instructions are executed by the processor to implement the steps of the method according to the first aspect.

According to a sixth aspect, UE is provided, including a processor and a communication interface, where the communication interface is configured to receive configuration information sent by a network side device, and the configuration information is used to configure at least one of the following: an RA resource corresponding to an RA procedure with Msg1 repetition, and a second RA resource corresponding to a contention-based second RA procedure with Msg1 repetition; and the processor is configured to perform Msg1 repetition based on the configuration information; where a contention-free first RA procedure with Msg1 repetition is corresponding to a first RA resource.

According to a seventh aspect, a network side device is provided, where the network side device includes a processor and a memory, the memory stores a program or instructions capable of running on the processor, and the program or the instructions are executed by the processor to implement the steps of the method according to the third aspect.

According to an eighth aspect, a network side device is provided, including a processor and a communication interface, where the communication interface is configured to send configuration information to UE, and the configuration information is used to configure at least one of the following: a first RA resource corresponding to a contention-free first RA procedure with Msg1 repetition, and a second RA resource corresponding to a contention-based second RA procedure with Msg1 repetition; where the configuration information is used by the UE to perform Msg1 repetition.

According to a ninth aspect, a communication system is provided, including: a terminal and a network side device, where the terminal may be configured to perform the steps of the RA method according to the first aspect, and the network side device may be configured to perform the steps of the RA method according to the third aspect.

According to a tenth aspect, a readable storage medium is provided, where a program or instructions are stored on the readable storage medium, and the program or the instructions are executed by a processor to implement the steps of the method according to the first aspect or the steps of the method according to the third aspect.

According to an eleventh aspect, a chip is provided, where the chip includes a processor and a communication interface, the communication interface is coupled to the processor, and the processor is configured to run a program or instructions to implement the method according to the first aspect or implement the method according to the third aspect.

According to a twelfth aspect, a computer program/program product is provided, where the computer program/program product is stored in a storage medium, and the computer program/program product is executed by at least one processor to implement the steps of the method according to the first aspect or the third aspect.

In the embodiments of this application, UE may receive configuration information sent by a network side device, where the configuration information is used to configure: an RA resource corresponding to an RA procedure with Msg1 repetition; and the UE may perform Msg1 repetition based on the configuration information. In this solution, because the configuration information received by the UE is used to configure the RA resource corresponding to the RA procedure based on Msg1 repetition, the UE may repeatedly transmit Msg1 based on the configuration information, thereby increasing a success rate of a random access process, and improving robustness of the random access process.

### BRIEF DESCRIPTION OF THE DRAWINGS

FIG. 1 is a schematic architectural diagram of a communication system according to an embodiment of this application;
FIG. 2 is a first schematic flowchart of selecting an RA resource in an RA procedure by using a related technology;
FIG. 3 is a second schematic flowchart of selecting an RA resource in an RA procedure by using a related technology;
FIG. 4 is a schematic flowchart of an RA method according to an embodiment of this application;
FIG. 5 is a schematic diagram of a size relationship between thresholds in an RA method according to an embodiment of this application;
FIG. 6 is a schematic diagram of an RO resource associated with a beam in an RA method according to an embodiment of this application;
FIG. 7 is a first schematic structural diagram of an RA apparatus according to an embodiment of this application;
FIG. 8 is a second schematic structural diagram of an RA apparatus according to an embodiment of this application;
FIG. 9 is a first schematic structural diagram of UE according to an embodiment of this application;
FIG. 10 is a second schematic structural diagram of UE according to an embodiment of this application; and
FIG. 11 is a schematic structural diagram of a network side device according to an embodiment of this application.

### DETAILED DESCRIPTION

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first" and "second" are used to distinguish between similar objects, but are unnecessarily used to describe a specific sequence or order. It should be understood that the terms in such a way are exchangeable in a proper case, so that the embodiments of this application described herein can be implemented in an order other than the order shown or described herein. In addition, objects distinguished by "first", "second", and the like are generally of one type, and a quantity of objects is not limited. For example, there may be one or more first objects. In addition, "and/or" in this specification and the claims represents at least one of the connected objects, and the character "/" generally represents an "or" relationship between the associated objects.

It should be noted that technologies described in embodiments of this application are not limited to a Long Term Evolution (Long Term Evolution, LTE)/LTE-Advanced (LTE-Advanced, LTE-A) system, and may be further applied to another wireless communication system such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency Division Multiple Access (Single-carrier Frequency Division Multiple Access, SC-LTE-A), and another system. The terms "system" and "network" in the embodiments of this application are often used interchangeably. The described technology may be used in the foregoing system and radio technology, or may be used in another system and radio technology. The following description describes a New Radio (New Radio, NR) system for example, and the NR term is used in most of the following descriptions. However, these technologies may also be applied to applications other than NR system applications, such as a 6th Generation (6^{th} Generation, 6G) communication system.

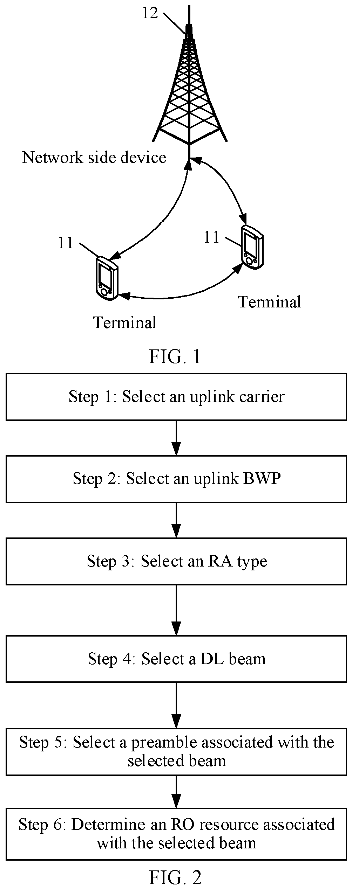

FIG. 1 is a block diagram of a wireless communication system applicable to an embodiment of this application. The wireless communication system includes a terminal 11 and a network side device 12. The terminal 11 may be a terminal-side device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, a ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicular user equipment (VUE), a pedestrian user equipment (PUE), a smart home (a home device with a wireless communication function, such as a refrigerator, a television, a washing machine, or furniture), a game machine, a personal computer (personal computer, PC), a teller machine, or a self-service device. The wearable device includes: a smart watch, a smart band, a smart headset, smart glasses, smart jewelry (a smart wristlet, a smart bracelet, a smart ring, a smart necklace, a smart leglet, a smart anklet, and the like), a smart wrist strap, a smart dress, and the like. It should be noted that, this embodiment of this application does not limit a particular type of the terminal 11. The network side device 12 may include an access network device or a core network device. The access network device 12 may also be referred to as a radio access network device, a radio access network (Radio Access Network, RAN), a radio access network function, or a radio access network unit. The access network device 12 may include a base station, a Wi-Fi access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another suitable term in the art. Provided that the same technical effect is achieved, the base station is not limited to a specific technical term. It should be noted that in this embodiment of this application, only a base station in an NR system is used as an example for description, and a specific type of the base station is not limited.

With reference to the accompanying drawings, the following describes in detail, by using some embodiments and application scenarios, the RA method and apparatus, the UE, the network side device, the communication system, and the readable storage medium provided in the embodiments of this application.

The following first briefly describes an RA procedure in the related technology.
(I) Contention-free RA procedure:
   1. UE receives RA resource configuration information that is corresponding to a contention-free RA procedure and that is indicated by a network side device. The configuration information may be used for a contention-free RA procedure triggered by a beam failure recovery (Beam Failure Recovery, BFR), handover (Handover, HO), or physical downlink control channel (Physical Downlink Control Channel, PDCCH) command. The configuration information indicates a beam indication (single side band (Single Side Band, SSB) or channel state information-reference signal (Channel State Information-Reference Signal, CSI-RS) beam) applicable to the contention-free RA procedure and an associated contention-free preamble. For a contention-free RA procedure triggered by the BFR and the HO, the configuration information may further include configuration information of a random access occasion (RACH Occasion, RO), and a reference signal receiving power (Reference Signal Receiving Power, RSRP) threshold configuration.
   2. After the UE obtains the configuration information, for the contention-free RA procedure triggered by the BFR and the HO, the UE determines, according to measured beam quality and an RSRP threshold, whether to use a contention-free RA resource (for example, only when the beam quality is higher than the RSRP threshold, the contention-free RA resource can be used). Then, after selecting a beam and a contention-free preamble corresponding to the beam, the UE sends Msg1 (carrying the contention-free preamble) to the network side device. After receiving Msg1, the network side device sends a second message (random access response (Random access response, RAR) to the UE, where the message carries uplink grant information and an RA preamble number (preamble ID). If the preamble ID is the same as a number of a random access preamble carried in Msg1 sent by the UE, the UE considers that the RA procedure succeeds; otherwise, the UE accumulatively increases a preamble transmission counter (PREAMBLE_TRANSMISSION_COUNTER) by one, initiates an RA attempt again, selects an RA resource again, and sends Msg1.
(II) RA resource selection process

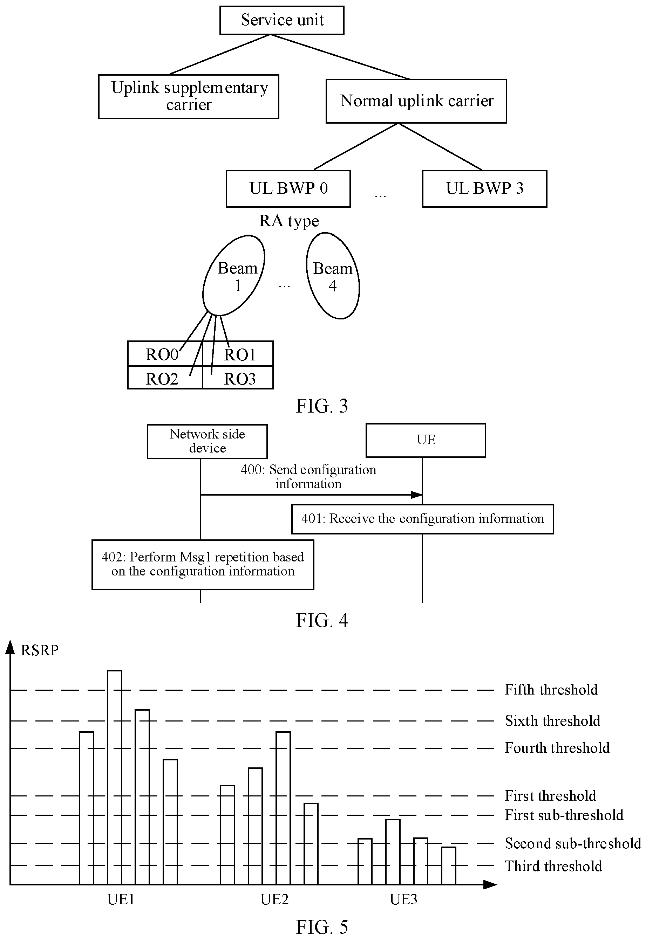

For example, as shown in FIG. 2 and FIG. 3, an RA resource selection procedure in a related art may include the following step 1 to step 6.

Step 1: Select an uplink (Uplink, UL) carrier.

Specifically, the UE first selects an uplink carrier according to a downlink path loss reference and a first RSRP threshold.

For example, an uplink carrier is selected from normal uplink carriers.

Step 2: Select an uplink bandwidth part (Bandwidth Part, BWP).

Specifically, on the uplink bandwidth part (Bandwidth Part, BWP) of the selected uplink carrier, if there is an RA resource, the UE performs RA on a currently activated uplink BWP. Otherwise, the UE is handed over to an initial uplink BWP.

For example, uplink UL BWP0 in FIG. 3 is selected.

After the uplink BWP is selected, for Rel-17 CovEnh, if the downlink path loss reference is less than a second RSRP threshold and a corresponding RA resource for repetition transmission of a third message (Msg3) is configured by the network side device, Msg3 repetition transmission may be requested.

Step 3: Select an RA type.

Specifically, for the Rel-16 technology, the UE may further select the RA type, such as 4-step RA or 2-step RA, according to the downlink path loss reference and the RSRP threshold (for example, at least one of the first RSRP threshold and the second RSRP threshold).

Step 4: Select a downlink (Download) beam.

Specifically, after the RA type is selected, the UE performs selection of an SSB according to measured L1-RSRP and a third RSRP threshold. For example, a beam 1 in FIG. 3 is selected.

Step 5: Select a preamble associated with the selected beam.

Specifically, the UE selects a preamble from preambles corresponding to the RA type and associated with the selected SSB according to the selected RA type.

Step 6: Determine an RO resource associated with the selected beam.

Specifically, the UE randomly and equiprobably selects an RO resource from RO resources corresponding to the selected RA type and associated with the selected SSB according to the selected RA type. For example, an RO 1 associated with the beam 1 is selected.

It may be learned from the descriptions of the foregoing (I) and (II) that in the related art, after determining that RA fails, the UE makes an RA attempt again, and consequently, robustness of a contention-free RA procedure is poor.

The RA method provided in the embodiment of this application may be applied to an RA procedure based on Msg1 repetition. In this method, UE may obtain RA resource configuration information that is corresponding to the RA procedure based on Msg1 repetition and that is indicated by a network side device, so that the UE can perform the RA procedure based on Msg1 repetition based on the configuration information, thereby improving robustness of the RA procedure.

An embodiment of this application provides an RA method. FIG. 4 is a schematic flowchart of an RA method according to an embodiment of this application. As shown in FIG. 4, the RA method provided in this embodiment of this application may include the following steps 400 to 402.

Step 400: A network side device sends configuration information to UE.

Step 401: The UE receives the configuration information.

The configuration information may be used to configure: an RA resource corresponding to an RA procedure with Msg1 repetition.

Optionally, the configuration information may be used to configure at least one of the following: a first RA resource corresponding to a contention-free first RA procedure with Msg1 repetition; or a second RA resource corresponding to a contention-based second RA procedure with Msg1 repetition. In this way, because the configuration information may be used to configure at least one of the first RA resource or the second RA resource, a probability that the UE successfully performs Msg1 repetition can be increased.

Optionally, the configuration information may be further used to configure at least one of the following: a seventh RA resource corresponding to a contention-based third RA procedure that is not applicable to Msg1 repetition; or an eighth RA resource corresponding to a contention-free fourth RA procedure that is not applicable to Msg1 repetition. In this way, when the UE cannot perform the first RA procedure and the second RA procedure, the UE may perform the third RA procedure based on the seventh RA resource or perform the fourth RA procedure based on the eighth RA resource. In this way, robustness of the RA procedure can be further improved.

Optionally, the configuration information may include at least one of the following: a resource selection threshold; a first repetition transmission indication; a second repetition transmission indication; a first resource set list of the first RA resource; a second resource set list of the second RA resource; a third repetition transmission indication; a total Msg1 repetition number; and a target beam identifier;
where the first repetition transmission indication is used to indicate to trigger the first RA procedure; the second repetition transmission indication is used to indicate a Msg1 repetition beam mode; each resource set list includes at least one resource set element, and each resource set element indicates at least one RA resource in the first RA resource or the second RA resource; the third repetition transmission indication is used to indicate a resource set element included in the first resource set list or the second resource set list; and the target beam identifier is used to indicate a target beam, and the target beam is associated with one or more RA resources in the first RA resource or the second RA resource.

Optionally, the first repetition transmission indication may be configured by using a first PDCCH or first radio resource control (Radio Resource Control, RRC) dedicated signaling. If the first repetition transmission indication is configured by using the first PDDCH, when a first index field value in the first PDDCH and corresponding to the first repetition transmission indication is 1, the first repetition transmission indication is used by the UE to trigger a contention-free first RA procedure with Msg1 repetition. In addition, if the first PDDCH further carries the third repetition transmission indication in this case, the UE ignores a preamble index (preamble index) field or an SSB index field carried in the first PDCCH. Optionally, the first PDDCH further includes a mask (mask) index field of a physical random access channel (Physical Random Access Channel, PRACH); and the first index field is located after the mask index field.

Optionally, the target beam identifier may be indicated by using a second PDCCH or second RRC dedicated signaling in the configuration information.

Optionally, the third repetition transmission indication may be indicated by using a third PDCCH or third RRC dedicated signaling.

Optionally, an RA resource indicated by each resource set element may include at least a part of beam resources associated with one or more beams, and the one or more beams are at least a part of beams associated with an RA resource configured by using the configuration information. In this way, RA resource selection may be performed based on a beam from the RA resource indicated by each resource set element.

With regard to the resource selection threshold:
Optionally, the resource selection threshold may include at least one of the following: a first threshold, a second threshold, a third threshold, a fourth threshold, a fifth threshold, and a sixth threshold.

The first threshold is used by the UE to determine whether to select the RA resource corresponding to the RA procedure based on Msg1 repetition; the second threshold is used for beam selection in the first RA procedure; the third threshold is used for beam selection in the second RA procedure; the fourth threshold is used by the UE to determine whether to select an RA resource corresponding to a contention-based RA procedure with Msg3 repetition; the fifth threshold is used for CSI-RS selection of a contention-free RA procedure (that is, the fourth RA procedure) that is not applicable to Msg1 repetition; and the sixth threshold is used for beam selection of the contention-based RA procedure with Msg3 repetition transmission.

The following describes the first threshold, the second threshold, and the third threshold in detail.

Optionally, the first threshold may be specifically used by the UE to determine whether to select the random access resource corresponding to the random access process based on Msg1 repetition.

With regard to the first threshold: If the network side device configures the second RA resource or the seventh RA resource, the network side device may configure the first threshold, that is, the configuration information may include: the second RA resource or the seventh RA resource and includes the first threshold.

Optionally, in a case in which the second RA resource and the seventh RA resource are configured in the configuration information, if the configuration information does not include the first threshold but includes the fourth threshold, the UE may set a value of the fourth threshold to a value of the first threshold.

Further optionally, the value of the first threshold is not expected to be greater than that of the fourth threshold, or the value of the first threshold is less than or equal to that of the fourth threshold.

Optionally, the third threshold may include a first sub-threshold and a second sub-threshold. The first sub-threshold is used for SSB selection of the contention-free RA procedure with Msg1 repetition, and the second sub-threshold is used for CSI-RS selection of the contention-free RA procedure with Msg1 repetition.

With regard to the first sub-threshold: If the network side device configures the first RA resource, the second RA resource, the seventh RA resource, and the eighth RA resource, the first RA resource includes an RA resource associated with an SSB, and the eighth RA resource includes at least one of the following: an RA resource associated with an SSB and an RA resource associated with a CSI-RS, the network side device may configure the first sub-threshold and the third threshold, that is, the configuration information may include the first sub-threshold and the third threshold.

Further, if the network side device does not configure the first sub-threshold but configures the third threshold, the UE may set a value of the third threshold to a value of the first sub-threshold.

Optionally, if the network side device configures the RA resource associated with the SSB and corresponding to the first RA procedure, the network side device may further configure the second RA resource at the same time.

Optionally, if the network side device configures the first RA resource, the second RA resource, the third RA resource, and the fourth RA resource, the first RA resource includes the RA resource associated with the CSI-RS, and the fourth RA resource includes: the RA resource associated with the CSI-RS, the network side device may configure the second sub-threshold and the fifth threshold. Further, if the network side device does not configure the second sub-threshold but configures the fifth threshold, the UE may set a value of the fifth threshold to the value of the first sub-threshold after receiving the configuration information.

Optionally, if the network side device configures the RA resource associated with the CSI-RS and corresponding to the contention-free RA procedure with Msg1 repetition, the network side device further configures the RA resource (that is, the second RA resource) corresponding to the contention-based RA procedure with Msg1 repetition at the same time.

With regard to the third threshold: If the network side device configures the second RA resource, the eighth RA resource, and the sixth threshold, and if the third threshold is not configured in this case, the UE may set a value of the sixth threshold to a value of the third threshold.

Optionally, when the third threshold is used for SSB selection, the sixth threshold is a threshold used for SSB selection of the contention-based RA procedure with Msg3 repetition; and when the third threshold is used for SSB selection, the sixth threshold is a threshold used for CSI-RS selection of the contention-based RA procedure with Msg3 repetition.

Optionally, FIG. 5 is a possible schematic diagram of a size relationship between thresholds in resource selection thresholds. It can be learned from FIG. 5 that, in a general case, the thresholds in the resource selection thresholds are arranged in descending order of values: the fifth threshold, the sixth threshold, the fourth threshold, the first threshold, the first sub-threshold, the second sub-threshold, and the third threshold.

Optionally, each threshold in the resource selection thresholds may be an RSRP threshold, or may be any other possible quality-related threshold, which may be specifically determined according to an actual use requirement, and is not limited in this application.

With regard to the second repetition transmission indication:

Optionally, the second repetition transmission indication may indicate a first beam mode or a second beam mode.

The first beam mode is: different times of repetition transmission are transmitted by using a same beam; or the first beam mode is: different times of repetition transmission are transmitted by using different beams.

It should be noted that, "different times of repetition transmission are transmitted by using different beams" may be understood as follows: Msg1 repetition is performed by using all or a part of resources associated with at least two beams.

"different times of repetition transmission are transmitted by using a same beam" may be understood as follows: Msg1 repetition is performed by using all or a part of resources associated with one beam.

With regard to the first resource set list of the first RA resource:
In this embodiment of this application, each resource set element in the first resource set list may indicate at least one RA resource in the first RA resource.

In this embodiment of this application, each resource set element in the second resource set list may indicate at least one RA resource in the second RA resource.

Generally, at least the first RA resource is configured in the configuration information. In the RA method provided in this embodiment of this application, the UE preferentially performs the contention-free RA procedure with Msg1 repetition.

In this way, the configuration information may be used to configure at least one of the resource selection threshold, the first repetition transmission indication, the second repetition transmission indication, the first resource set list of the first RA resource, the second resource set list of the second RA resource, the third repetition transmission indication, the total Msg1 repetition number, and the target beam identifier. Therefore, after receiving the configuration information, the UE performs random access resource selection by using one or more pieces of information in the configuration information, thereby improving flexibility and diversity of manners in which the UE has the random access resource for performing Msg1 repetition.

Optionally, the RA resource configured by using the configuration information may be associated with at least one beam, and the RA resource configured by using the configuration information may include at least one of the following: a second beam resource associated with the at least one beam; and a configuration parameter related to an RA procedure;
where the second beam resource may include at least one of the following: a repetition transmission count associated with each beam in the at least one beam; a preamble resource associated with each beam in the at least one beam; an RO resource associated with each beam in the at least one beam; and
a beam mode associated with each beam in the at least one beam.

It should be noted that, the at least one beam is configured by using configuration information, and the at least one beam may also be referred to as a part of RA resources.

Optionally, a configuration parameter related to the RA procedure may include a preamble receive target power, and the like.

In this way, the RA resource configured by using the configuration information may be corresponding to at least one beam. Therefore, after receiving the configuration information, the UE may select, in a beam selection manner, the RA resource used for Msg1 repetition from the RA resource configured by using the configuration information, so that the RA resource can be accurately selected.

Step 402: The UE performs Msg1 repetition based on the configuration information.

In this embodiment of this application, after receiving the configuration information, the UE may select an RA resource (for example, the following target RA resource) based on the configuration information, and then perform Msg1 repetition based on the selected RA resource.

Optionally, if the target RA resource is selected from the first RA resource, the UE may perform Msg1 repetition in the first RA procedure based on the target RA resource; or if the target RA resource is selected from the second RA resource, the UE may perform Msg1 repetition in the second RA procedure based on the target RA resource.

Optionally, the UE may select the target RA resource by using a media access control (Media Access Control, MAC) entity in the UE, and then the MAC entity may indicate a physical layer in the UE to perform Msg1 repetition according to the target RA resource.

Optionally, in this embodiment of this application, step 402 may be specifically implemented by using the following step 402a.

### Step 402a:

The UE performs Msg1 repetition based on the configuration information and a first rule.

The following describes the first rule in detail.

Optionally, it is assumed that the first RA resource is associated with N first beams, and/or the second RA resource is associated with M second beams, where N and M may be positive integers; then, the first rule may include at least one of the following rules 1 to 12:
It may be understood that the N first beams are beams corresponding to the first RA procedure, the M second beams are beams corresponding to the first RA procedure, and both the N first beams and the M second beams are configured by the network side device.

**Rule 1:** If a measurement value corresponding to a downlink path loss reference is less than the first threshold, the UE considers that Msg1 repetition is applicable to a current RA procedure. Otherwise, the UE considers that Msg1 repetition is not applicable to a current RA procedure.

Further optionally, Rule 1 may be specifically as follows: If the second RA resource and the eighth RA resource are configured in the configuration information, and a measurement value (for example, RSRP) corresponding to a downlink path loss reference is less than the first threshold (being an RSRP threshold), the UE considers that Msg1 repetition is applicable to a current RA procedure. Otherwise, the UE considers that Msg1 repetition is not applicable to a current RA procedure.

In this embodiment of this application, when the configuration information includes the first threshold, the measurement value corresponding to the downlink path loss reference being less than the first threshold is a prerequisite for the UE to perform Msg1 repetition.

It should be noted that, Rule 1 determines, based on a size relationship between the measurement value corresponding to the downlink path loss reference and the first threshold, whether Msg1 repetition is applicable to a current RA procedure. In actual implementation, the UE may further determine, by using any other possible method, whether Msg1 repetition is applicable to a current RA procedure, which may be specifically determined according to an actual use requirement.

**Rule 2:** If a measurement value of at least one first beam of the N first beams is greater than the second threshold, the UE selects all or a part of RA resources associated with at least a part of the at least one first beam as a target RA resource.

In this embodiment of this application, the target RA resource may be used by the UE to perform Msg1 repetition. That is, after selecting the target RA resource, the UE may repeatedly transmit Msg1 based on the target RA resource.

It should be noted that, in actual implementation, the UE may perform Msg1 repetition based on the target RA resource and the at least a part of first beam.

Optionally, the at least one first beam in Rule 2 may be: at least one SSB (the second threshold is specifically the first sub-threshold) or at least one CSI-RS (the second threshold is specifically the second sub-threshold).

The at least one second beam in Rule 2 may be: at least one SSB (the third threshold is specifically used to select an SSB) or at least one CSI-RS (the third threshold is used to select a CSI-RS).

**Rule 3:** If the first RA resource and the second RA resource are configured in the configuration information, the UE selects all or a part of RA resources in the second RA resource as a candidate target RA resource.

Optionally, the candidate target RA resource may be determined based on one of the following: randomly selected from the second RA resource; randomly selected from RA resources associated with the M second beams; and determined, based on a second beam that meets a second condition in the M second beams, for example, all or a part of RA resources associated with the second beam that meets the second condition are determined as the target candidate RA resources. The second condition is that a measurement value of a beam is greater than the third threshold.

Optionally, the UE may select the candidate target RA resource based on Rule 3 in a case in which it is considered that Msg1 repetition is applicable to a current random access process.

Certainly, in actual implementation, after failing to select the target RA resource by using Rule 2 (that is, no suitable target RA resource is selected), the UE may select the candidate target RA resource based on Rule 3, so as to reduce power consumption.

**Rule 4:** If a beam mode associated with a third beam is a first beam mode, the UE selects all or a part of RA resources associated with the third beam as the target RA resource.

**Rule 5:** If a beam mode associated with a third beam is a second beam mode, the UE selects a part of RA resources associated with the third beam and a part of RA resources associated with at least one fourth beam as the target RA resource.

The third beam is one of the N first beams; and the fourth beam is at least one of the N first beams. The first beam mode is: different times of repetition transmission are transmitted by using a same beam; or the first beam mode is: different times of repetition transmission are transmitted by using different beams.

In Rule 4 and Rule 5, each first beam may be associated with one beam mode. In other words, each first beam has an association relationship with one beam mode. It may be understood that a beam mode associated with each first beam may be indicated by using one piece of indication information, for example, indicated by using one second repetition transmission indication. That is, in this case, each first beam may be associated with one second repetition transmission indication.

Optionally, the beam mode associated with each first beam may be the same or different. For example, a beam 1 is corresponding to the first beam mode, and a beam 2 is corresponding to the second beam mode.

Optionally, the third beam is determined based on at least one of the following: randomly selected from the N first beams; and randomly selected from a fifth beam; where the fifth beam is a first beam in the N first beams that meets a first condition; and the first condition is that a measurement value of a beam is greater than the second threshold.

Optionally, the third beam may be a first beam selected by the UE after receiving the configuration information.

Optionally, a priority of selecting the third beam may be preset, for example, a priority of "randomly selected from the fifth beam" is higher than a priority of "randomly selected from the N first beams".

In this way, because the third beam may be randomly selected from the N first beams, or the third beam may be randomly selected from the fifth beam, flexibility of selecting the third beam can be improved.

Optionally, the fourth beam is determined based on at least one of the following: randomly selected from the N first beams; randomly selected from a fifth beam;
based on the total Msg1 repetition number; based on the third beam; and based on a first beam resource associated with the third beam;
where the fifth beam is a first beam in the N first beams that meets a first condition; and the first condition is that a measurement value of a beam is greater than the second threshold.

The first beam resource includes at least one of the following: a repetition transmission count associated with the third beam; a preamble resource associated with the third beam; and a random access occasion RO resource associated with the third beam.

In this way, the first rule indicates the UE to select the target RA resource from the first RA resource based on the beam mode associated with the third beam, so that the target RA resource selected by the UE matches the beam mode associated with the third beam.

**Rule 6:** If measurement values of the N first beams are all less than or equal to the second threshold, the second RA resource is configured in the configuration information, and a measurement value of at least one second beam of the M second beams is greater than the third threshold, the UE selects all or a part of RA resources associated with at least a part of the at least one second beam as the target RA resource. In Rule 4, the second RA resource may be considered as the candidate target RA resource. In this way, in a case in which the UE fails to select the target RA resource by using Rule 2, the UE may continue to select the target RA resource based on Rule 6.

**Rule 7:** If the first repetition transmission indication is configured in the configuration information, the UE uses a third RA resource in the first RA resource as a target RA resource.

**Rule 8:** If the first resource set list is configured in the configuration information, the UE uses a fourth RA resource in the first RA resource as a target RA resource.

Optionally, when the first rule includes Rule 7 and Rule 8, the UE specifically uses a fourth RA resource in the first RA resource as the target RA resource.

Optionally, the third RA resource is determined based on at least one of the following: randomly selected from RA resources associated with N first beams; and randomly selected from an RA resource associated with a fifth beam;
where the fifth beam is a first beam in the N first beams that meets a first condition, or is determined based on the target beam identifier; and the first condition is that a measurement value of a beam is greater than the second threshold.

Optionally, the fourth RA resource is determined based on at least one of the following: randomly selected from an RA resource indicated by one resource set element included in the first resource set list; randomly selected from an RA resource associated with a fifth beam; and based on the third repetition transmission indication; where the fifth beam is a first beam in the N first beams that meets a first condition, or is determined based on the target beam identifier; and the first condition is that a measurement value of a beam is greater than the second threshold.

In this way, on one hand, the UE may select the target RA resource from the first RA resource under triggering by the first repetition transmission indication. On the other hand, the UE may select the target RA resource from the RA resource indicated by the first RA resource set list. In this way, flexibility of selecting the target RA resource can be improved.

**Rule 9:** If the second repetition transmission indication indicates a first beam mode, the UE selects at least a part of RA resources associated with one of the N first beams as a target RA resource.

**Rule 10:** If the second repetition transmission indication indicates a second beam mode, the UE selects at least a part of RA resources associated with multiple first beams in the N first beams as the target RA resources.

The first beam mode is: different times of repetition transmission are transmitted by using a same beam; or
the first beam mode is: different times of repetition transmission are transmitted by using different beams.

It should be noted that, when the UE selects the target RA resource based on Rule 10, the UE needs to perform beam selection for multiple times, and selects one first beam at a time. Each time one first beam is selected, the UE may select a part of RA resources in the target RA resources based on the first beam, and determine whether a selected Msg1 repetition number is equal to a total Msg1 repetition number. If it is determined that a selected Msg1 repetition number is equal to a total Mgs repetition number, it indicates that the UE has completed selection of the target RA resource, so that the UE may perform Msg1 repetition based on the selected RA resource (that is, the target RA resource). Otherwise, the UE continues to select a next first beam, and selects a part of RA resources in the target RA resources based on a recently selected beam, until the UE determines that a selected Msg1 repetition number is equal to a total Mgs repetition number, the UE may perform Msg1 repetition based on the selected RA resource.

In this way, in Rules 9 and 10, the UE may determine, according to a beam mode associated with a selected beam (that is, the third beam), a beam mode used by the UE to perform Msg1 repetition.

Optionally, assuming that the candidate target RA resource is associated with at least one second beam of the M second beams, the first rule may further include the following rule:
Rule 13: If measurement values of the N first beams are all less than or equal to the second threshold, and the second RA resource is configured in the configuration information, the UE may select all or a part of RA resources associated with at least a part of the at least one second beam as the target RA resource.

For Rule 13, "all or a part of RA resources associated with at least a part of the at least one second beam" is an RA resource in "the candidate target RA resources". That is, the target RA resource is selected from the candidate target RA resources based on at least a part of the second beam.

Optionally, for Rule 13, the target RA resource may be determined based on at least one of the following:
randomly selected from an RA resource indicated by a first resource set element; and randomly selected from an RA resource associated with one second beam of the at least one second beam.

The first resource set element is one element of the second resource set list, and the first resource set element indicates at least a part of RA resources in the candidate target RA resource. Further optionally, the first resource set element may be determined based on one of the following: based on a target beam identifier; and based on the third repetition transmission indication.

For example, assuming that the second resource set list and the target beam identifier are configured in the configuration information, the target beam identifier indicates a beam b1, and the beam b1 is associated with an RA resource r1 in the second RA resource, the UE may use a resource set element that is in the second resource set list and that indicates the RA resource r1 as the first resource set element.

For another example, assuming that the second resource set list and the third repetition transmission indication are configured in the configuration information, and the third repetition transmission indication indicates a resource set element e1 in the second resource set list, the first resource set element is the resource set element e1.

Optionally, in this embodiment of this application, in a case in which the UE fails to select the RA resource from the first RA resource, the UE selects a resource from the second RA resource.

In this way, in a case in which the first RA resource does not include the RA resource that meets the second threshold, because the UE further selects the target RA resource from the candidate target RA resource, a success rate of selecting the target RA resource can be increased, and robustness of the random access process can be improved. Optionally, the RA resource used for Msg1 repetition and the RA resource used for non-Msg1-repetition may be configured at the same time. The configuration information may further be used to configure at least one of the following: a seventh RA resource corresponding to a contention-based third RA procedure that is not applicable to Msg1 repetition; or an eighth RA resource corresponding to a contention-free fourth RA procedure that is not applicable to Msg1 repetition. Therefore, when Msg1 repetition is not applicable to a current RA procedure (for example, the measurement value corresponding to the downlink path loss reference is greater than or equal to the first threshold), the UE may perform a first operation.

The first operation includes one of the following: selecting at least a part of RA resources in the seventh RA resource, and performing the third RA procedure based on the selected RA resource; and selecting at least a part of RA resources in the eighth RA resource, and performing the fourth RA procedure based on the selected RA resource.

For a description of selecting the RA resource from the seventh RA resource or the eighth RA resource by the UE, refer to the foregoing embodiment for detailed related descriptions of selecting the target RA resource by the UE. To avoid repetition, details are not described herein again.

Optionally, the first rule may further include the following Rule 12:
Rule 12: If no RO resource is configured in the first RA resource, the second RA resource is configured in the configuration information, and the RO resource is configured in the second RA resource, the UE performs Msg1 repetition in the first RA procedure by using the RO resource in the second RA resource.

For example, the UE may map the RO resource in the second RA resource to the M first beams based on a preset mapping relationship, so that each first beam is mapped to at least one RO resource in the first RO resource.

Optionally, after receiving the configuration information, the UE may select the target RA resource based on at least one of the foregoing Rules 2 to 12, and then perform Msg1 repetition based on the target RA resource.

Optionally, after receiving the configuration information, the UE may determine, based on the configuration information, which rules in Rule 1 to Rule 12 are to be used to select the target RA resource.

The following exemplarily describes, with reference to specific examples, the RA method provided in this embodiment of this application.

Example 1: The first rule includes Rule 2, Rule 3, Rule 6, and Rule 13. It is assumed that the configuration information is used to configure at least: the first RA resource, the second RA resource, the total Msg1 repetition number, the first sub-threshold, the second sub-threshold, and the third threshold. It is also assumed that the first RA resource is associated with the N first beams, the second RA resource is associated with the M second beams, and the UE considers that Msg1 repetition is applicable to a current RA procedure. Then, the UE may select the target RA resource based on the configuration information and the first rule, and perform Msg1 repetition based on the target RA resource. Specifically,
first, the UE selects the target RA resource by using the MAC entity in the UE in the following manner 1-1 or manner 1-2.

Manner 1-1: If the N first beams include at least one first beam whose measurement value is greater than the second threshold, the UE selects the target RA resource based on Rule 2. Specifically,
(1) If a measurement value (for example, RSRP) of at least one SSB in the N first beams is greater than the first sub-threshold, the UE selects one SSB from the at least one SSB. Alternatively, (2) if a measurement value (for example, RSRP) of at least one CSI-RS in one or more CSI-RSs associated with the first RA resource is greater than the second sub-threshold, the UE may select one CSI-RS from the at least one CSI-RS.

Then, the UE selects at least one preamble sequence number from preamble sequence numbers that are associated with the SSB or the CSI-RS and that are used for Msg1 repetition, and selects a recently transmissible RO resource set from RO resources that are associated with the SSB or the CSI-RS and that are used for Msg1 repetition, where the RO resource set includes: one or more recently transmissible RO resources, and a quantity of RO resources in the RO resource set may be determined based on the total Msg1 repetition number.

It should be noted that, the target RA resource may at least include: the RO resource set selected by the UE and a preamble corresponding to the selected at least one preamble sequence number.

Manner 1-2: If all measurement values of the N first beams are less than the second threshold, the UE may select the target RA resource based on Rule 6. Specifically, the UE selects one beam whose measurement value is greater than the third threshold from the M second beams. If there is no beam whose measurement value is greater than the third threshold, the UE randomly selects one beam (such as an SSB) from the M second beams.

Then, the UE selects sequence numbers of one or more preambles that are used for contention-based Msg1 repetition and that are corresponding to the beam as the sequence number for transmitting the preamble, and selects the recently transmissible RO resource set (including the selected recently transmissible one or more RO resources and Msg1 repetition number) that are used for contention-based Msg1 repetition and that are corresponding to the beam. The RO resource set is indicated according to the second RA resource, that is, all RO resources in the RO resource set are some RO resources in the second RA resource. In this case, the second RA resource may be considered as the candidate target RA resource.

Manner 1-3: The UE selects the target RA resource based on Rule 3 and Rule 13. It is assumed that the candidate target RA resource selected by the UE from the second RA resource based on Rule 3 includes: all RA resources associated with four second beams (including at least a recently transmissible RO resource set and a sequence number of a preamble). Then, the UE may use all or a part of RA resources associated with one of the four second beams (for example, a sixth beam) as the target RA resource. That is, the UE first selects the candidate target RA resource based on Rule 3, and then selects the target RA resource from the candidate target RA resource based on Rule 13.

Second, the scheduling, by the UE, the physical layer in the UE by using the MAC entity in the UE, so that the physical layer is based on the target RA resource specifically includes: A selected beam, a sequence number of a preamble, and a resource such as a recently transmissible RO resource are used to perform Msg1 repetition.

In this way, the UE may first select the target RA resource from the first RA resource, and in a case in which the selection fails, continue to select the target RA resource from the second RA resource. Therefore, a probability that the UE successfully selects the target RA resource can be increased, and therefore, robustness of the RA procedure can be improved.

Example 2: The first rule includes Rule 7 and Rule 9. It is assumed that the first RA resource is configured in the configuration information, Msg1 is repeatedly transmitted four times (that is, the total Msg1 repetition number), and the first repetition transmission indication. The first RA resource is associated with beams SSB#0 and SSB#1 (that is, N (N=2) first beams). Specifically, the first RA resource may include: a preamble sequence number #60 associated with SSB#0, an RO resource set 1 (for example, Msg1 repetition is performed by using a TDMed RO), and a second repetition transmission indication indicating the first beam mode; and a preamble sequence number #61 associated with SSB#1, an RO resource set 2, and a second repetition transmission indication indicating the first beam mode. The first beam mode is: different times of repetition transmission use the same beam mode. Then,
first, the UE selects the target RA resource by using the MAC entity in the UE in the following manner 2-1 or manner 2-2.

Manner 2-1: If the first sub-threshold is further configured in the configuration information,
(1) If a measurement value of at least one first beam (for example, SSB#0) included in the N first beams is greater than a measurement value of the first sub-threshold (that is, the first threshold), one first beam (SSB#0) may be selected from the at least one first beam. Then, because SSB#0 is associated with the first beam mode, the UE may select SSB#0 to associate with the preamble sequence number #60, and determine, according to the total Msg1 repetition number 4 and the RO resource set 1, four recently transmissible RO resources (that is, the target RA resources) that are associated with SSB#0 and that are used for Msg1 repetition.
(2) If all measurement values of the N first beams are less than or equal to the first sub-threshold, then the UE may randomly select a first beam (e.g., SSB#60) from the N first beams. Then, because SSB#0 is associated with the first beam mode, the UE may select SSB#0 to associate with the preamble sequence number #60, and determine, according to the total Msg1 repetition number (4) and the RO resource set 1, four recently transmissible RO resources (that is, the target RA resources) that are associated with SSB#0 and that are used for Msg1 repetition.

Manner 2-2: The UE randomly selects a first beam (such as SSB#0) from the N first beams. For a description of selecting the target RA resource by the UE based on SSB#0, refer to related descriptions in 2-1. To avoid repetition, details are not described herein again.

Second, after the MAC entity selects the target RA resource, that the MAC entity may indicate the physical layer target RA resource of the UE specifically includes: A selected beam, a sequence number of a preamble, and a recently transmissible RO resource set are used to perform Msg1 repetition.

It can be seen that in Example 2, the UE performs Msg1 repetition based on an RA resource associated with the same first beam.

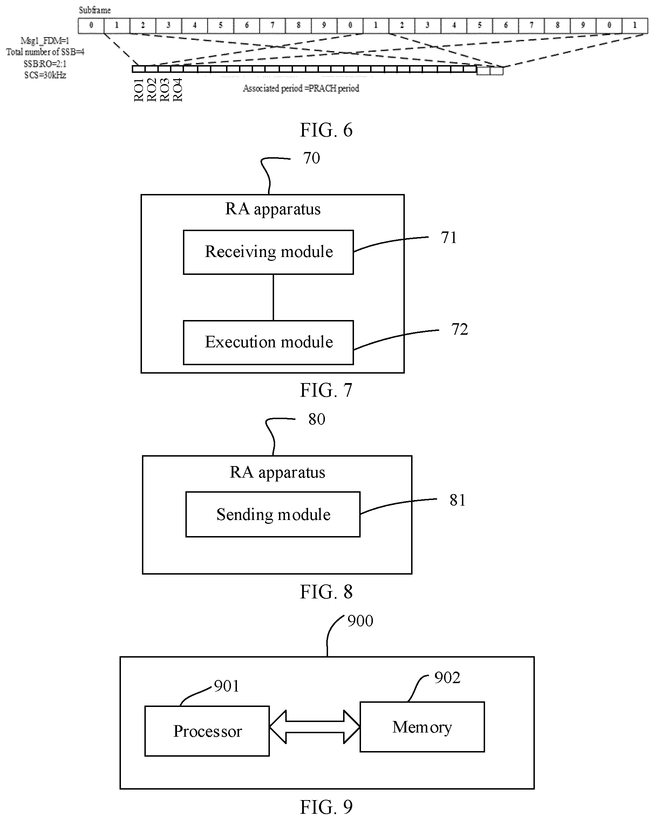

Optionally, assuming that the R0 resource set 1 in Example 2 includes the RO resource shown in FIG. 6, as shown in FIG. 6, the four RO resources determined by the UE from the RO resource set 1 according to the total Msg1 repetition number may include: RO1 and RO3 in the first subframe #1 and RO1 and RO3 in the second subframe #2 in any frame; or RO3 in the first subframe #1, RO1 and RO3 in the second subframe #2, and RO1 in the third subframe #3, and by analogy. It may be learned that the UE may randomly select four transmissible RO resources from the RO resources in the RO resource set 1.

As shown in FIG. 6, each frame may include ten subframes 0-9. Each subframe may include multiple RO resources (as shown in FIG. 6, each small cell of the second row represents one RO resource).

Example 3: The first rule includes: Rule 7 and Rule 10. It is assumed that the configuration information is used to configure at least: the first RA resource, the first repetition transmission indication, the second repetition transmission indication, and the total Msg1 repetition number 8 (that is, the total Msg1 repetition number). The first RA resource is associated with two SSBs (that is, N (N=2) first beams, which are respectively SSB#0 and SSB#1). Specifically, the first RA resource includes: the preamble sequence number #60 associated with SSB#0, the Msg1 repetition number 2, and the RO resource set 1 (for example, Msg1 repetition is performed by using a TDMed RO resource); and the preamble sequence number #61 associated with SSB#1, the Msg1 repetition number 4, and the RO resource set 2. In addition, the second repetition transmission indication indicates: Different times of repetition transmission use different beam modes (i.e., the second beam mode). Then,
first, the UE may select the first SSB by using the MAC entity in the UE in the following manner 3-1 or manner 3-2, and select a part of RA resources in the target RA resource based on the SSB.

Manner 3-1: If the first sub-threshold is further configured in the configuration information, if a measurement value of at least one SSB in the two SSBs associated with the first RA resource is greater than the first sub-threshold, the UE may select the first SSB from the at least one SSB (for example, select SSB#0). Otherwise, the UE randomly selects the first SSB from the two SSBs (for example, randomly select SSB#0). Then, the UE may select a preamble sequence number associated with SSB#0 (that is, the first SSB) and used for Msg1 repetition as a sequence number (for example, the preamble sequence number #60) for sending the preamble; determine, from the RO resource set 1 associated with SSB#0, two recently transmissible RO resources used for Msg1 repetition according to the Msg1 repetition number 2 associated with SSB#0; and then, determine the Msg1 repetition number (2) selected by the UE. Manner 3-2: The UE may directly randomly select the first SSB (such as SSB#0) from the two SSBs. Then, the UE may select a preamble sequence number (e.g., the preamble sequence number #60) associated with SSB#0 (i.e., the first SSB) and used for Msg1 repetition; and determine, according to Msg1 repetition number and the RO set corresponding to the SSB, that the SSB is corresponding to the recently transmissible RO set (two ROs) used for Msg1 repetition, and then determine the selected Msg1 repetition number (2).

Second, the UE may continue to select the second SSB (e.g., select SSB#1) by using the MAC entity in the UE. Then, the UE may select a preamble sequence number (for example, Preamble#61) associated with SSB#1 and used for Msg1 repetition as the preamble sequence number for sending; determine, from the RO resource set 2 associated with SSB#1 according to the Msg1 repetition number (specifically, 4) associated with SSB#1, four recently transmissible RO resources used for Msg1 repetition; and then, determine the Msg1 repetition number (6, that is, 2 + 4) selected by the UE. Because the selected Msg1 repetition number 6 < the total Msg1 repetition number 8, the UE may continue to select the third SSB (for example, the UE selects SSB#0 again) based on the configuration information, Rule 7, and Rule 10. Then, the UE may select Preamble#61 associated with SSB#1; and determine, from the RO resource set 2 associated with SSB#1, two recently transmissible RO resources (different from the RO resources selected the first time) according to the Msg1 repetition number (specifically, 4) associated with SSB#1. In this case, because the selected Msg1 repetition number 8 = the total Msg1 repetition number, the UE may determine that selection of the target RA resource has been completed.

Therefore, after the MAC entity selects the target RA resource, that the MAC entity may indicate the physical layer target RA resource of the UE specifically includes: A selected beam, a sequence number of a preamble, and a recently transmissible RO resource set are used to perform Msg1 repetition.

Example 4: The first rule includes Rule 7 and Rule 8. It is assumed that the configuration information is used to configure: the first RA resource and the first resource set list, where the N first beams indicated by the first RA resource include SSB#0, SSB#1, SSB#2, and SSB#3, the first resource set element list includes a resource set element #e0 and a resource set element #e1, and #e1 and #e2 are respectively index values of two resource set elements in the first resource set element list.

The resource set element #e0 indicates: the preamble sequence number #60 associated with SSB#0, the Msg1 repetition number 4, and the RO resource set 1 (for example, Msg1 repetition is performed by using a TDMed RO resource); and the preamble sequence number #61 associated with SSB#1, the Msg1 repetition number 4, and the RO resource set 2. The resource set element #e1 indicates: the preamble sequence number #61 associated with SSB#1, the Msg1 repetition number 2, and the RO resource set 2; a preamble sequence number #62 associated with SSB#2, the Msg1 repetition number 4, and an RO resource set 3; and a preamble sequence number #63 associated with SSB#3, the Msg1 repetition number 2, and the RO resource set 3. It may be understood that a preamble sequence number associated with a beam, Msg1 repetition number, and the RO resource set may be associated with a beam resource. The UE may perform Msg1 repetition based on manner 4-1, manner 4-2, or manner 3.

Manner 4-1: When the UE acknowledges that Msg1 repetition is applicable to a current RA procedure, the UE may select an SSB from the N first beams in the manner of the foregoing Example 1 (for example, select SSB#0). Then the UE may select, according to SSB# and the first resource set list, all transmit beams used for Msg1 repetition, a preamble sequence number for sending, and a recently transmissible RO set. Specifically, after the UE selects SSB#0, the UE may find, from the first resource set list, the resource set element #e0 and the resource set element #e1 that include the beam resource associated with SSB#0, and randomly select the resource set element #e0. Therefore, the UE may determine, according to the resource set element #e0, that Msg1 repetition needs to be performed four times on four RO resources in the RO resource set 1 according to SSB#0 and the preamble sequence number #60 during Msg1 repetition. Then, Msg1 repetition is performed four times on four RO resources in the RO resource set 2 according to SSB#1 and the preamble sequence number #61. It can be seen that the target RA resource includes: the preamble sequence number #60, the four RO resources in the RO resource set 1, the preamble sequence number #61, and the four RO resources in the RO resource set 2.

After the UE selects the target RA resource, the MAC entity of the UE may successively indicate the physical layer of the UE to perform Msg1 repetition according to the selected SSBs (that is, SSB#0 and SSB#1), the preamble sequence numbers (that is, the preamble sequence number #60 and the preamble sequence number #61), and the RO resources (that is, the four RO resources in the RO resource set 1 and the four RO resources in the RO resource set 2).

Manner 4-2: It is assumed that the configuration information is further used to configure: the first repetition transmission indication and the target beam identifier (configured by using a PDCCH or RRC dedicated signaling); where an indication field corresponding to the first repetition transmission indication in the PDCCH is 1, and the target beam identifier indicates SSB#0. Then, the UE may select SSB#0 (that is, the fifth beam is determined based on the target beam identifier) according to the target beam identifier indicated by the PDCCH, then determine, according to the selected SSB#0 and the first resource set list, all transmit beams used for Msg1 repetition, a preamble sequence number for sending and a recently transmissible RO resource set. Specifically, after determining SSB#0, the UE may find, from the first resource set list, the resource set element #e0 and the resource set element #e1 that include the beam resource associated with SSB#0, and randomly select the resource set element #e0. Therefore, the UE may determine, according to the resource set element #e0, that Msg1 repetition needs to be performed four times on four RO resources in the RO resource set 1 according to SSB#0 and the preamble sequence number #60 during Msg1 repetition. Then, Msg1 repetition is performed four times on four RO resources in the RO resource set 2 according to SSB#1 and the preamble sequence number #61. It can be seen that the target RA resource includes: the preamble sequence number #60, the four RO resources in the RO resource set 1, the preamble sequence number #61, and the four RO resources in the RO resource set 2. It should be noted that, the resource set element #e1 may indicate to repeatedly send Msg1 four times based on SSB#1, and then send Msg1 four times based on SSB#1.

After the UE selects the target RA resource, the MAC entity of the UE may successively indicate the physical layer of the UE to perform Msg1 repetition according to the selected SSBs (that is, SSB#0 and SSB#1), the preamble sequence numbers (that is, the preamble sequence number #60 and the preamble sequence number #61), and the RO resources (that is, the four RO resources in the RO resource set 1 and the four RO resources in the RO resource set 2).

Manner 3: It is assumed that the configuration information is further used to configure: the first repetition transmission indication and the third repetition transmission indication (configured by using a third PDCCH or third RRC dedicated signaling). If the third repetition transmission indication indicates an index value of a resource set element in the first resource set list, the UE determines the resource set element #e1 according to the index value (for example, #e1) indicated by the third repetition transmission indication. Therefore, the UE may determine, according to the resource set element #e0, that Msg1 repetition needs to be performed four times on four RO resources in the RO resource set 1 according to SSB#0 and the preamble sequence number #60 during Msg1 repetition. Then, Msg1 repetition is performed four times on four RO resources in the RO resource set 2 according to SSB#1 and the preamble sequence number #61. It can be seen that the target RA resource includes: the preamble sequence number #60, the four RO resources in the RO resource set 1, the preamble sequence number #61, and the four RO resources in the RO resource set 2. It should be noted that, the resource set element #e1 may indicate to repeatedly send Msg1 four times based on SSB#1, and then send Msg1 four times based on SSB#1.

After the UE selects the target RA resource, the MAC entity of the UE may successively indicate the physical layer of the UE to perform Msg1 repetition according to the selected SSBs (that is, SSB#0 and SSB#1), the preamble sequence numbers (that is, the preamble sequence number #60 and the preamble sequence number #61), and the RO resources (that is, the four RO resources in the RO resource set 1 and the four RO resources in the RO resource set 2).

Optionally, after step 402, the RA method provided in this embodiment of this application may further include the following step 403 and step 404, or may include the following step 405 and step 406.

Step 403: In a case in which the UE successfully completes the first RA procedure, the UE sends a first physical uplink shared channel (Physical Uplink Shared Channel, PUSCH) according to a repetition number of the first PUSCH.

Step 404: The network side device receives the first PUSCH.

The first RA procedure is a contention-free RA procedure with Msg1 repetition, and the first PUSCH is a PUSCH scheduled by a random access response (Random Access Response, RAR) sent by the network side device.

In this embodiment of this application, after Msg1 repetition, the UE performs RAR interpretation and sending of the first PUSCH on the assumption that repetition transmission of the first PUSCH is scheduled by the RAR.

Specifically, if the UE uses the RA resource corresponding to the RA procedure based on Msg1 repetition; or the UE indicates to perform Msg1 repetition. After successfully decoding a matched RAR, the UE may determine, according to a modulation and coding scheme (Modulation and Coding Scheme, MCS) field in the RAR and specifically according to two most significant bits of the MCS, a repetition number of a PUSCH scheduled by the RAR, and send, according to the determined repetition number, the PUSCH scheduled by the RAR.

The RAR is sent by the network side device to the UE after receiving Msg1 repeatedly transmitted by the UE.

In this way, in a case in which the UE successfully completes the RA procedure, because the UE may send the first PUSCH scheduled by the RAR, the UE may repeatedly send the PUSCH scheduled by the RAR, thereby increasing a probability of successfully sending the PUSCH.

Step 405: In a case in which the UE successfully completes the first RA procedure, the UE reports information about the first RA procedure to the network side device.

Step 406: The network side device receives the information about the first RA procedure.

The information about the first RA procedure is used by the network side device to adjust a resource configuration corresponding to the first RA procedure.

Optionally, the information about the first RA procedure may be used to indicate at least one of the following: whether a beam associated with the first RA resource includes a beam whose measurement value is greater than a second threshold; and an RA resource used by the UE in the first RA procedure; where the second threshold is used for beam selection of the contention-free first RA procedure with Msg1 repetition.

Optionally, for each RA attempt in the first RA procedure, the UE may report whether a beam associated with the first RA resource includes a beam whose measurement value is greater than the second threshold.

For example, for each RA attempt in the first RA procedure, the UE may report whether the SSB associated with the first RA resource includes at least one SSB whose measurement value is greater than the first sub-threshold, or may report whether the CSI-RS associated with the first RA resource includes at least one CSI-RS whose measurement value is greater than the second sub-threshold.

Optionally, "the RA resource used by the UE in the first RA procedure" may include: a sequence number of a beam selected by the UE, such as a sequence number of an SSB or a sequence number of a CSI-RS, an RO resource selected from an RO resource corresponding to the selected beam, or a sequence number of the RO resource selected from the RO resource corresponding to the selected beam.

In this embodiment of this application, in a case in which the UE successfully completes the first RA procedure, the UE may report the information about the first RA procedure to the network side device, so that after receiving the information about the first RA procedure, the network side device may adjust, based on the information, the resource configuration corresponding to the first RA procedure, so that the adjusted resource configuration of the first RA procedure can be more matched with the first rule.

The RA method provided in this embodiment of this application may be performed by an RA apparatus. An RA apparatus provided in an embodiment of this application is described in an embodiment of this application by using an example in which the RA apparatus performs an RA method.

An embodiment of this application further provides an RA apparatus. FIG. 7 is a schematic structural diagram of an RA apparatus according to an embodiment of this application. As shown in FIG. 7, the RA apparatus 70 may include: a receiving module 71 and an execution module 72. The receiving module 71 is configured to receive configuration information sent by a network side device, where the configuration information is used to configure at least one of the following: an RA resource corresponding to an RA procedure with Msg1 repetition, and a second RA resource corresponding to a contention-based second RA procedure with Msg1 repetition; and the execution module 72 is configured to perform Msg1 repetition based on the configuration information received by the receiving module 71; where a contention-free first RA procedure with Msg1 repetition is corresponding to a first RA resource.

In a possible implementation, the configuration information includes at least one of the following: a resource selection threshold; a first repetition transmission indication; a second repetition transmission indication; a first resource set list of the first RA resource; a second resource set list of the second RA resource; a third repetition transmission indication; a total Msg1 repetition number; and a target beam identifier; where the resource selection threshold includes at least one of the following: a first threshold and a second threshold; the first threshold is used by the UE to determine whether to select the RA resource corresponding to the RA procedure based on Msg1 repetition; the second threshold is used for beam selection in the first RA procedure; the first repetition transmission indication is used to indicate to trigger the first RA procedure; the second repetition transmission indication is used to indicate a Msg1 repetition beam mode; each resource set list includes at least one resource set element, and each resource set element indicates at least one RA resource in the first RA resource or the second RA resource; the third repetition transmission indication is used to indicate a resource set element included in the first resource set list or the second resource set list; and the target beam identifier is used to indicate a target beam, and the target beam is associated with one or more RA resources in the first RA resource or the second RA resource.

In a possible implementation, the execution module 72 is specifically configured to perform Msg1 repetition based on the configuration information and a first rule.

In a possible implementation, the first RA resource is associated with N first beams, where N is a positive integer; the second RA resource is associated with M second beams, where M is a positive integer; and the first rule includes at least one of the following:
if a measurement value corresponding to a downlink path loss reference is less than the first threshold, the UE considers that Msg1 repetition is applicable to a current RA procedure;
if the first RA resource and the second RA resource are configured in the configuration information, the UE selects all or a part of RA resources in the second RA resource as a candidate target RA resource; and
if a measurement value of at least one first beam of the N first beams is greater than the second threshold, the UE selects all or a part of RA resources associated with at least a part of the at least one first beam as a target RA resource; where the target RA resource is used to perform Msg1 repetition.

In a possible implementation, the candidate target RA resource is associated with at least one second beam of the M second beams; and the first rule further includes: if measurement values of the N first beams are all less than or equal to the second threshold, and the second RA resource is configured in the configuration information, the UE selects all or a part of RA resources associated with at least a part of the at least one second beam as the target RA resource.

In a possible implementation, the first rule includes: if the measurement values of the N first beams are all less than or equal to the second threshold, and the second RA resource is configured in the configuration information, the UE selects all or a part of RA resources associated with at least a part of the at least one second beam as the target RA resource; and the target RA resource is determined based on at least one of the following: randomly selected from an RA resource indicated by a first resource set element; and
randomly selected from an RA resource associated with one second beam of the at least one second beam; where the first resource set element is one element of the second resource set list, and the first resource set element indicates at least a part of RA resources in the candidate target RA resource.

In a possible implementation, the first rule further includes at least one of the following: if a beam mode associated with a third beam is a first beam mode, the UE selects all or a part of RA resources associated with the third beam as the target RA resource; or if a beam mode associated with a third beam is a second beam mode, the UE selects a part of RA resources associated with the third beam and a part of RA resources associated with at least one fourth beam as the target RA resource; where the third beam is one of the N first beams; the fourth beam is at least one of the N first beams; and the first beam mode is: different times of repetition transmission are transmitted by using a same beam; or the first beam mode is: different times of repetition transmission are transmitted by using different beams.

In a possible implementation, the third beam is determined based on at least one of the following: randomly selected from the N first beams; randomly selected from a fifth beam; and where the fifth beam is a first beam in the N first beams that meets a first condition; and
the first condition is that a measurement value of a beam is greater than the second threshold.

In a possible implementation, the fourth beam is determined based on at least one of the following: randomly selected from the N first beams; randomly selected from a fifth beam; based on the total Msg1 repetition number; based on the third beam; and based on a first beam resource associated with the third beam; where the fifth beam is a first beam in the N first beams that meets a first condition; and the first condition is that a measurement value of a beam is greater than the second threshold; and
the first beam resource includes at least one of the following: a repetition transmission count associated with the third beam; a preamble resource associated with the third beam; and a random access occasion RO resource associated with the third beam.

In a possible implementation, the first rule further includes at least one of the following:
if the first repetition transmission indication is configured in the configuration information, the UE uses a third RA resource in the first RA resource as a target RA resource; or
if the first resource set list is configured in the configuration information, the UE uses a fourth RA resource in the first RA resource as a target RA resource.

In a possible implementation, the third RA resource is determined based on at least one of the following: randomly selected from RA resources associated with the N first beams; and randomly selected from an RA resource associated with a fifth beam; where the fifth beam is a first beam in the N first beams that meets a first condition, or is determined based on the target beam identifier; and the first condition is that a measurement value of a beam is greater than the second threshold.

In a possible implementation, the fourth RA resource is determined based on at least one of the following: randomly selected from an RA resource indicated by one resource set element included in the first resource set list; randomly selected from an RA resource associated with a fifth beam; and based on the third repetition transmission indication; where the fifth beam is a first beam in the N first beams that meets a first condition, or is determined based on the target beam identifier; and the first condition is that a measurement value of a beam is greater than the second threshold.

In a possible implementation, the first RA resource is associated with N first beams, where N is a positive integer; the first rule includes at least one of the following: if the second repetition transmission indication indicates a first beam mode, the UE selects at least a part of RA resources associated with one of the N first beams as a target RA resource; or if the second repetition transmission indication indicates a second beam mode, the UE selects at least a part of RA resources associated with multiple first beams in the N first beams as the target RA resources; where the first beam mode is: different times of repetition transmission are transmitted by using a same beam; or the first beam mode is: different times of repetition transmission are transmitted by using different beams.

In a possible implementation, an RA resource configured in the configuration information is associated with at least one beam; and the RA resource configured in the configuration information includes at least one of the following: a second beam resource associated with the at least one beam; and a configuration parameter related to an RA procedure; where the second beam resource includes at least one of the following:
a repetition transmission count associated with each beam in the at least one beam; a preamble resource associated with each beam; an RO resource associated with each beam; and
a beam mode associated with each beam.

In a possible implementation, the RA apparatus may further include a sending module.

The sending module is configured to: after the execution module 72 performs Msg1 repetition based on the configuration information, in a case in which the UE successfully completes the first RA procedure, send a first PUSCH to the network side device according to a repetition number of the first PUSCH, or report information about the first RA procedure to the network side device;
where the first RA procedure is a contention-free RA procedure with Msg1 repetition, and the information about the first RA procedure is used by the network side device to adjust a resource configuration corresponding to the first RA procedure; and
the first PUSCH is a PUSCH scheduled by a random access response RAR sent by the network side device.

In a possible implementation, the information about the first RA procedure is used to indicate at least one of the following: whether a beam associated with the first RA resource includes a beam whose measurement value is greater than a second threshold; and an RA resource used by the UE in the first RA procedure; where the second threshold is used for beam selection of the contention-free first RA procedure with Msg1 repetition.

In the RA apparatus provided in this embodiment of this application, the RA apparatus may receive configuration information sent by a network side device, and the configuration information is used to configure: an RA resource corresponding to an RA procedure with Msg1 repetition; and the RA apparatus may perform Msg1 repetition based on the configuration information. In this solution, because the configuration information received by the RA apparatus is used to configure the RA resource corresponding to the RA procedure based on Msg1 repetition, the RA apparatus may repeatedly transmit Msg1 based on the configuration information, thereby increasing a success rate of a random access process, and improving robustness of the random access process.

An embodiment of this application further provides an RA apparatus. FIG. 8 is a schematic structural diagram of an RA apparatus according to an embodiment of this application. As shown in FIG. 8, the RA apparatus 80 may include: the sending module 81, configured to send configuration information to UE, where the configuration information is used to configure at least one of the following: a first RA resource corresponding to a contention-free first RA procedure with Msg1 repetition, and a second RA resource corresponding to a contention-based second RA procedure with Msg1 repetition; where the configuration information is used by the UE to perform Msg1 repetition.

In a possible implementation, the configuration information may include one of the following: a resource selection threshold; a first repetition transmission indication;
a second repetition transmission indication; a first resource set list of the first RA resource; a second resource set list of the second RA resource;
a third repetition transmission indication; a total Msg1 repetition number; and a target beam identifier;
where the resource selection threshold includes at least one of the following: a first threshold and a second threshold;
the first threshold is used by the UE to determine whether to select the RA resource corresponding to the RA procedure based on Msg1 repetition;
the second threshold is used for beam selection in the first RA procedure;
the first repetition transmission indication is used to indicate to trigger the first RA procedure;
the second repetition transmission indication is used to indicate a Msg1 repetition beam mode;
each resource set list includes at least one resource set element, and each resource set element indicates at least one RA resource in the first RA resource or the second RA resource;
the third repetition transmission indication is used to indicate a resource set element included in the first resource set list or the second resource set list; and
the target beam identifier is used to indicate a target beam, and the target beam is associated with one or more RA resources in the first RA resource or the second RA resource.

In a possible implementation, the RA apparatus 80 may further include: a receiving module; and the receiving module is configured to: after the sending module sends the configuration information to the UE, receive a first PUSCH or information about the first RA procedure sent by the UE; where the first RA procedure is a contention-free RA procedure with Msg1 repetition, and the information about the first RA procedure is used by the RA apparatus to adjust a resource configuration corresponding to the first RA procedure; and the first PUSCH is a PUSCH scheduled by an RAR sent by the RA apparatus to the UE.

In a possible implementation, the information about the first RA procedure indicates at least one of the following:
whether a beam associated with the first RA resource includes a beam whose measurement value is greater than a second threshold; and
an RA resource used by the UE in the first RA procedure;
where the second threshold is used for beam selection of the contention-free first RA procedure with Msg1 repetition.

In the RA apparatus provided in this embodiment of this application, the RA apparatus may send configuration information to UE, where the configuration information is used to configure: an RA resource corresponding to an RA procedure with Msg1 repetition; and where the configuration information is used by the UE to perform Msg1 repetition. In this solution, because the RA apparatus may configure, by using the configuration information, the RA resource corresponding to the RA procedure based on Msg1 repetition, the UE may repeatedly transmit Msg1 based on the configuration information, thereby increasing a success rate of a random access process, and improving robustness of the random access process.

The RA apparatus in this embodiment of this application may be an electronic device, for example, an electronic device with an operating system, or may be a component in the electronic device, for example, an integrated circuit or a chip. The electronic device may be a terminal, or may be another device except the terminal. For example, the terminal may include but is not limited to the type of the foregoing listed terminal 11. Another device may be a server, a network attached storage (Network Attached Storage, NAS), or the like. This is not specifically limited in this embodiment of this application.

The RA apparatus provided in this embodiment of this application can implement various processes realized in the method embodiments of FIG. 4 to FIG. 6, and achieve the same technical effects. To avoid repetition, details are not described herein.

Optionally, as shown in FIG. 9, an embodiment of this application further provides UE 900, including a processor 901 and a memory 902, and a program or instructions capable of running on the processor 901 are stored in the memory 902. For example, when the UE 900 is a terminal, each step of the embodiment of the RA method is implemented when the program or the instructions are executed by the processor 901, and the same technical effect can be achieved. When the UE 900 is a network side device, each step of the foregoing RA method embodiment is implemented when the program or the instructions are executed by the processor 901, and the same technical effect can be achieved. To avoid repetition, details are not described herein again.

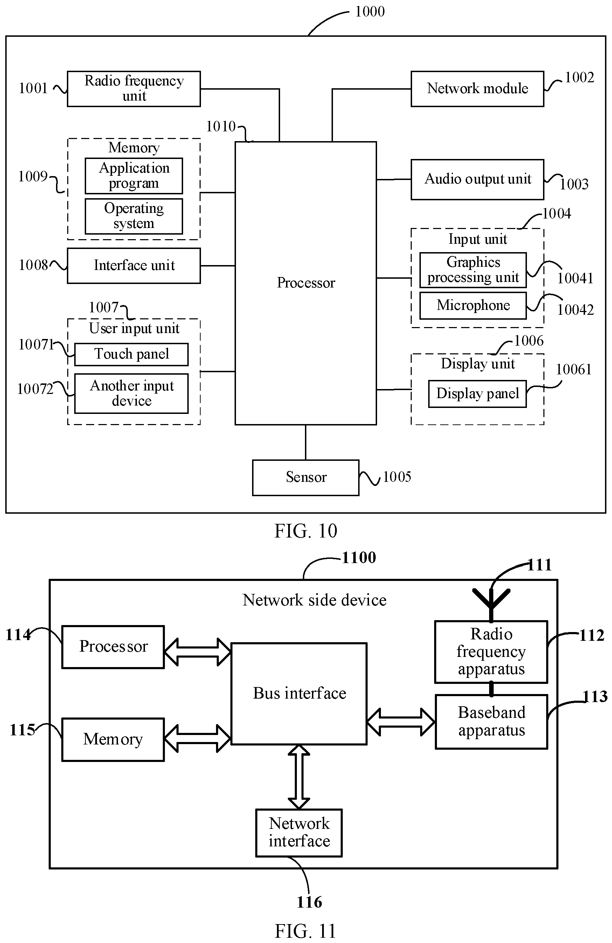

An embodiment of this application further provides UE, including a processor and a communication interface, where the communication interface is configured to receive configuration information sent by a network side device, and the configuration information is used to configure at least one of the following: an RA resource corresponding to an RA procedure with Msg1 repetition, and a second RA resource corresponding to a contention-based second RA procedure with Msg1 repetition; and the processor is configured to perform Msg1 repetition based on the configuration information; where a contention-free first RA procedure with Msg1 repetition is corresponding to a first RA resource. This UE embodiment is corresponding to the foregoing UE-side method embodiment. Each implementation process and implementation of the foregoing method embodiment may be applied to this UE embodiment, and the same technical effect can be achieved. Specifically, FIG. 10 is a schematic diagram of a hardware structure of UE according to an embodiment of this application.

The terminal 1000 includes, but is not limited to: at least some components of a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (for example, a battery) that supplies power to each component. The power supply may be logically connected to the processor 1010 by using a power management system, so as to manage functions such as charging, discharging, and power consumption by using the power management system. The terminal structure shown in FIG. 10 constitutes no limitation on the terminal, and the terminal may include more or fewer components than those shown in the figure, or combine some components, or have different component arrangements.

It should be understood that, in this embodiment of this application, the input unit 1004 may include a graphics processing unit (Graphics Processing Unit, GPU) 10041 and a microphone 10042. The graphics processing unit 10041 processes image data of a still picture or a video obtained by an image capture apparatus (such as a camera) in a video capture mode or an image capture mode. The display unit 1006 may include a display panel 10061. The display panel 10061 may be configured in a form such as a liquid crystal display or an organic light-emitting diode. The user input unit 1007 may include at least one of a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a function key (such as a volume control key or an on/off key), a trackball, a mouse, and a joystick. Details are not described herein.

In this embodiment of this application, the radio frequency unit 1001 receives downlink data from the network side device and may transmit the downlink data to the processor 1010 for processing. In addition, the radio frequency unit 1001 may send uplink data to the network side device. Generally, the radio frequency unit 1001 includes but is not limited to: an antenna, an amplifier, a transceiver, a coupler, a low noise amplifier, and a duplexer.

The memory 1009 may be configured to store a software program, instructions, and various data. The memory 1009 may mainly include a first storage area for storing a program or instructions and a second storage area for storing data, where the first storage area may store an operating system, an application program or instructions (such as a sound playback function or an image playback function) required by at least one function, and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in this embodiment of this application includes but is not limited to these and any other suitable type of memory.

The processor 1010 may include one or more processing units. Optionally, the processor 1010 integrates an application processor and a modem processor, where the application processor mainly processes operations involving an operating system, a user interface, an application program, or the like, and the modem processor mainly processes a wireless communication signal, such as a baseband processor. It may be understood that the modem processor may not be integrated into the processor 1010.

The radio frequency unit 1001 is configured to receive configuration information sent by a network side device, where the configuration information is used to configure at least one of the following: an RA resource corresponding to an RA procedure with Msg1 repetition, and a second RA resource corresponding to a contention-based second RA procedure with Msg1 repetition; and the processor 1010 is configured to perform Msg1 repetition based on the configuration information received by the radio frequency unit 1001; where a contention-free first RA procedure with Msg1 repetition is corresponding to a first RA resource.

In a possible implementation, the configuration information includes at least one of the following: a resource selection threshold; a first repetition transmission indication; a second repetition transmission indication; a first resource set list of the first RA resource; a second resource set list of the second RA resource; a third repetition transmission indication; a total Msg1 repetition number; and a target beam identifier; where the resource selection threshold includes at least one of the following: a first threshold and a second threshold; the first threshold is used by the UE to determine whether to select the RA resource corresponding to the RA procedure based on Msg1 repetition; the second threshold is used for beam selection in the first RA procedure; the first repetition transmission indication is used to indicate to trigger the first RA procedure; the second repetition transmission indication is used to indicate a Msg1 repetition beam mode; each resource set list includes at least one resource set element, and each resource set element indicates at least one RA resource in the first RA resource or the second RA resource; the third repetition transmission indication is used to indicate a resource set element included in the first resource set list or the second resource set list; and the target beam identifier is used to indicate a target beam, and the target beam is associated with one or more RA resources in the first RA resource or the second RA resource.

In a possible implementation, the processor 1010 is specifically configured to perform Msg1 repetition based on the configuration information and a first rule.

In a possible implementation, the first RA resource is associated with N first beams, where N is a positive integer; the second RA resource is associated with M second beams, where M is a positive integer; and the first rule includes at least one of the following: if a measurement value corresponding to a downlink path loss reference is less than the first threshold, the UE considers that Msg1 repetition is applicable to a current RA procedure;
if the first RA resource and the second RA resource are configured in the configuration information, the UE selects all or a part of RA resources in the second RA resource as a candidate target RA resource; and
if a measurement value of at least one first beam of the N first beams is greater than the second threshold, the UE selects all or a part of RA resources associated with at least a part of the at least one first beam as a target RA resource;
where the target RA resource is used to perform Msg1 repetition.

In a possible implementation, the candidate target RA resource is associated with at least one second beam of the M second beams; and
the first rule further includes: if measurement values of the N first beams are all less than or equal to the second threshold, and the second RA resource is configured in the configuration information, the UE selects all or a part of RA resources associated with at least a part of the at least one second beam as the target RA resource.

In a possible implementation, the first rule includes: if the measurement values of the N first beams are all less than or equal to the second threshold, and the second RA resource is configured in the configuration information, the UE selects all or a part of RA resources associated with at least a part of the at least one second beam as the target RA resource; and
the target RA resource is determined based on at least one of the following:
randomly selected from an RA resource indicated by a first resource set element; and
randomly selected from an RA resource associated with one second beam of the at least one second beam;
where the first resource set element is one element of the second resource set list, and the first resource set element indicates at least a part of RA resources in the candidate target RA resource.

In a possible implementation, the first rule further includes at least one of the following:
if a beam mode associated with a third beam is a first beam mode, the UE selects all or a part of RA resources associated with the third beam as the target RA resource; or
if a beam mode associated with a third beam is a second beam mode, the UE selects a part of RA resources associated with the third beam and a part of RA resources associated with at least one fourth beam as the target RA resource;
where the third beam is one of the N first beams;
the fourth beam is at least one of the N first beams; and
the first beam mode is: different times of repetition transmission are transmitted by using a same beam; or
the first beam mode is: different times of repetition transmission are transmitted by using different beams.

In a possible implementation, the third beam is determined based on at least one of the following: randomly selected from the N first beams;
randomly selected from a fifth beam; and where the fifth beam is a first beam in the N first beams that meets a first condition; and
the first condition is that a measurement value of a beam is greater than the second threshold.

In a possible implementation, the fourth beam is determined based on at least one of the following: randomly selected from the N first beams;
randomly selected from a fifth beam; based on the total Msg1 repetition number; based on the third beam; and based on a first beam resource associated with the third beam; where the fifth beam is a first beam in the N first beams that meets a first condition; and the first condition is that a measurement value of a beam is greater than the second threshold; and the first beam resource includes at least one of the following: a repetition transmission count associated with the third beam; a preamble resource associated with the third beam; and a random access occasion RO resource associated with the third beam.

In a possible implementation, the first rule further includes at least one of the following:
if the first repetition transmission indication is configured in the configuration information, the UE uses a third RA resource in the first RA resource as a target RA resource; or
if the first resource set list is configured in the configuration information, the UE uses a fourth RA resource in the first RA resource as a target RA resource.

In a possible implementation, the third RA resource is determined based on at least one of the following: randomly selected from RA resources associated with the N first beams; and randomly selected from an RA resource associated with a fifth beam; where the fifth beam is a first beam in the N first beams that meets a first condition, or is determined based on the target beam identifier; and the first condition is that a measurement value of a beam is greater than the second threshold.

In a possible implementation, the fourth RA resource is determined based on at least one of the following: randomly selected from an RA resource indicated by one resource set element included in the first resource set list; randomly selected from an RA resource associated with a fifth beam; and based on the third repetition transmission indication; where the fifth beam is a first beam in the N first beams that meets a first condition, or is determined based on the target beam identifier; and the first condition is that a measurement value of a beam is greater than the second threshold.

In a possible implementation, the first RA resource is associated with N first beams, where N is a positive integer;
the first rule includes at least one of the following:
if the second repetition transmission indication indicates a first beam mode, the UE selects at least a part of RA resources associated with one of the N first beams as a target RA resource; or
if the second repetition transmission indication indicates a second beam mode, the UE selects at least a part of RA resources associated with multiple first beams in the N first beams as the target RA resources;
where the first beam mode is: different times of repetition transmission are transmitted by using a same beam; or
the first beam mode is: different times of repetition transmission are transmitted by using different beams.

In a possible implementation, an RA resource configured in the configuration information is associated with at least one beam; and
the RA resource configured in the configuration information includes at least one of the following: a second beam resource associated with the at least one beam; and
a configuration parameter related to an RA procedure; where the second beam resource includes at least one of the following: a repetition transmission count associated with each beam in the at least one beam; a preamble resource associated with each beam; an RO resource associated with each beam; and a beam mode associated with each beam.

In a possible implementation, the RA apparatus may further include a radio frequency unit 1001.

The radio frequency unit 1001 is configured to: after the processor 1010 performs Msg1 repetition based on the configuration information, in a case in which the UE successfully completes the first RA procedure, send a first PUSCH to the network side device according to a repetition number of the first PUSCH, or report information about the first RA procedure to the network side device;
where the first RA procedure is a contention-free RA procedure with Msg1 repetition, and the information about the first RA procedure is used by the network side device to adjust a resource configuration corresponding to the first RA procedure; and
the first PUSCH is a PUSCH scheduled by a random access response RAR sent by the network side device.

In a possible implementation, the information about the first RA procedure is used to indicate at least one of the following:
whether a beam associated with the first RA resource includes a beam whose measurement value is greater than a second threshold; and
an RA resource used by the UE in the first RA procedure;
where the second threshold is used for beam selection of the contention-free first RA procedure with Msg1 repetition.

In the UE provided in this embodiment of this application, the UE may receive configuration information sent by a network side device, where the configuration information is used to configure: an RA resource corresponding to an RA procedure with Msg1 repetition; and the UE may perform Msg1 repetition based on the configuration information. In this solution, because the configuration information received by the UE is used to configure the RA resource corresponding to the RA procedure based on Msg1 repetition, the UE may repeatedly transmit Msg1 based on the configuration information, thereby increasing a success rate of a random access process, and improving robustness of the random access process.

An embodiment of this application further provides a network side device, including a processor and a communication interface, where the communication interface is configured to send configuration information to UE, and the configuration information is used to configure at least one of the following: a first RA resource corresponding to a contention-free first RA procedure with Msg1 repetition, and a second RA resource corresponding to a contention-based second RA procedure with Msg1 repetition; where the configuration information is used by the UE to perform Msg1 repetition. The network side device embodiment is corresponding to the foregoing network side device method embodiment. Each implementation process and implementation of the foregoing method embodiment may be applicable to the network side device embodiment, and the same technical effect can be achieved.

Specifically, an embodiment of this application further provides a network side device. As shown in FIG. 11, a network side device 1100 includes: an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information by using the antenna 111, and sends the received information to the baseband apparatus 113 for processing. In a downlink direction, the baseband apparatus 113 processes information that needs to be sent, and sends processed information to the radio frequency apparatus 112. The radio frequency apparatus 112 processes the received information, and sends processed information by using the antenna 111.

In the foregoing embodiment, the method performed by the network side device may be implemented in the baseband apparatus 113. The baseband apparatus 113 includes a baseband processor.

The baseband apparatus 113 may include, for example, at least one baseband board, where multiple chips are disposed on the baseband board. As shown in FIG. 11, one chip is, for example, the baseband processor, which is connected to the memory 115 through a bus interface, so as to schedule a program in the memory 115 to perform an operation of the network device shown in the foregoing method embodiment.

The network side device may further include a network interface 116, and the interface is, for example, a common public radio interface (common public radio interface, CPRI).

Specifically, the network side device 1100 of this embodiment of the present invention further includes: instructions or a program stored in the memory 115 and capable of running on the processor 114. The processor 114 invokes the instructions or the program in the memory 115 to perform the method performed by the modules shown in FIG. 7, and achieves the same technical effect. To avoid repetition, details are not described herein again.

An embodiment of this application further provides a readable storage medium. The readable storage medium stores a program or instructions. When the program or the instructions is or are executed by a processor, various processes in the foregoing RA method embodiments are implemented, and the same technical effect can be achieved. To avoid repetition, details are not described herein again.

The processor is a processor in the terminal in the foregoing embodiment. The readable storage medium may be non-volatile, or may be non-transient. The readable storage medium may include a computer-readable storage medium such as a read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement various processes in the foregoing RA method embodiments, and the same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, and the computer program/program product is executed by at least one processor to implement each process in the embodiment of the foregoing RA method, and can achieve the same technical effect. To avoid repetition, details are not described herein again.

An embodiment of this application further provides a communication system, including: UE and a network side device, where the UE may be configured to perform the steps performed by the UE in the RA method embodiment, and the network side device may be configured to perform the steps performed by the network side device in the RA method embodiment.

It should be noted that, the terms "include", "comprise", or any other variation thereof in this specification are intended to cover a non-exclusive inclusion, so that a process, method, article, or apparatus that includes a list of elements includes the elements, and also includes other elements that are not expressly listed, or further includes elements inherent to such a process, method, article, or apparatus. Without more limitations, elements defined by the sentence "including one" does not exclude that there are still other same elements in the processes, methods, objects, or apparatuses that include the elements. In addition, it should be noted that the scope of the method and apparatus in the embodiments of this application is not limited to performing a function in a sequence shown or discussed, and may further include performing a function in a basically simultaneous manner or in a reverse sequence based on a related function. For example, the described method may be performed in an order from the described order, and various steps may be added, omitted, or combined. In addition, features described with reference to some examples may be combined in other examples.

Based on the descriptions in the foregoing implementations, a person skilled in the art may clearly learn that the method in the foregoing embodiment may be implemented by software in addition to a necessary universal hardware platform or by hardware only. In most circumstances, the former is a better implementation. Based on such an understanding, the technical solutions of this application essentially, or the part contributing to the related art, may be presented in the form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. The foregoing specific implementations are merely examples, and are not restrictive. Under the enlightenment of this application, many forms may be further made by a person of ordinary skill in the art without departing from the objective of this application and the protection scope of the claims and shall fall within the protection scope of this application.

## Claims

1. A random access RA method, comprising:
receiving, by a user equipment UE, configuration information sent by a network side device, wherein the configuration information is used to configure at least one of the following: an RA resource corresponding to an RA procedure with Msg1 repetition, and a second RA resource corresponding to a contention-based second RA procedure with Msg1 repetition; and
performing, by the UE, Msg1 repetition based on the configuration information;
wherein a contention-free first RA procedure with Msg1 repetition is corresponding to a first RA resource.

2. The method according to claim 1, wherein the configuration information comprises at least one of the following:
a resource selection threshold;
a first repetition transmission indication;
a second repetition transmission indication;
a first resource set list of the first RA resource;
a second resource set list of the second RA resource;
a third repetition transmission indication;
a total Msg1 repetition number; and
a target beam identifier;
wherein the resource selection threshold comprises at least one of the following: a first threshold and a second threshold;
the first threshold is used by the UE to determine whether to select the RA resource corresponding to the RA procedure based on Msg1 repetition;
the second threshold is used for beam selection in the first RA procedure;
the first repetition transmission indication is used to indicate to trigger the first RA procedure;
the second repetition transmission indication is used to indicate a Msg1 repetition beam mode;
each resource set list comprises at least one resource set element, and each resource set element indicates at least one RA resource in the first RA resource or the second RA resource;
the third repetition transmission indication is used to indicate a resource set element comprised in the first resource set list or the second resource set list; and
the target beam identifier is used to indicate a target beam, and the target beam is associated with one or more RA resources in the first RA resource or the second RA resource.

3. The method according to claim 2, wherein the performing, by the UE, Msg1 repetition based on the configuration information comprises:
performing, by the UE, Msg1 repetition based on the configuration information and a first rule.

4. The method according to claim 3, wherein
the first RA resource is associated with N first beams, wherein N is a positive integer;
the second RA resource is associated with M second beams, wherein M is a positive integer; and
the first rule comprises at least one of the following:
if a measurement value corresponding to a downlink path loss reference is less than the first threshold, the UE considers that Msg1 repetition is applicable to a current RA procedure;
if the first RA resource and the second RA resource are configured in the configuration information, the UE selects all or a part of RA resources in the second RA resource as a candidate target RA resource; and
if a measurement value of at least one first beam of the N first beams is greater than the second threshold, the UE selects all or a part of RA resources associated with at least a part of the at least one first beam as a target RA resource;
wherein the target RA resource is used to perform Msg1 repetition.

5. The method according to claim 4, wherein the candidate target RA resource is associated with at least one second beam of the M second beams; and
the first rule further comprises: if measurement values of the N first beams are all less than or equal to the second threshold, and the second RA resource is configured in the configuration information, the UE selects all or a part of RA resources associated with at least a part of the at least one second beam as the target RA resource.

6. The method according to claim 5, wherein
the first rule comprises: if the measurement values of the N first beams are all less than or equal to the second threshold, and the second RA resource is configured in the configuration information, the UE selects all or a part of RA resources associated with at least a part of the at least one second beam as the target RA resource; and
the target RA resource is determined based on at least one of the following:
randomly selected from an RA resource indicated by a first resource set element; and
randomly selected from an RA resource associated with one second beam of the at least one second beam;
wherein the first resource set element is one element of the second resource set list, and the first resource set element indicates at least a part of RA resources in the candidate target RA resource.

7. The method according to claim 4, wherein
the first rule further comprises at least one of the following:
if a beam mode associated with a third beam is a first beam mode, the UE selects all or a part of RA resources associated with the third beam as the target RA resource; or
if a beam mode associated with a third beam is a second beam mode, the UE selects a part of RA resources associated with the third beam and a part of RA resources associated with at least one fourth beam as the target RA resource;
wherein the third beam is one of the N first beams;
the fourth beam is at least one of the N first beams; and
the first beam mode is: different times of repetition transmission are transmitted by using a same beam; or
the first beam mode is: different times of repetition transmission are transmitted by using different beams.

8. The method according to claim 7, wherein
the third beam is determined based on at least one of the following:
randomly selected from the N first beams; and
randomly selected from a fifth beam;
wherein the fifth beam is a first beam in the N first beams that meets a first condition; and
the first condition is that a measurement value of a beam is greater than the second threshold.

9. The method according to claim 7, wherein
the fourth beam is determined based on at least one of the following:
randomly selected from the N first beams;
randomly selected from a fifth beam;
based on the total Msg1 repetition number;
based on the third beam; and
based on a first beam resource associated with the third beam;
wherein the fifth beam is a first beam in the N first beams that meets a first condition; and
the first condition is that a measurement value of a beam is greater than the second threshold; and
the first beam resource comprises at least one of the following:
a repetition transmission count associated with the third beam;
a preamble resource associated with the third beam; and
a random access occasion RO resource associated with the third beam.

10. The method according to claim 3, wherein
the first rule further comprises at least one of the following:
if the first repetition transmission indication is configured in the configuration information, the UE uses a third RA resource in the first RA resource as a target RA resource; or
if the first resource set list is configured in the configuration information, the UE uses a fourth RA resource in the first RA resource as a target RA resource.

11. The method according to claim 10, wherein the third RA resource is determined based on at least one of the following:
randomly selected from RA resources associated with N first beams; and
randomly selected from an RA resource associated with a fifth beam;
wherein the fifth beam is a first beam in the N first beams that meets a first condition, or is determined based on the target beam identifier; and
the first condition is that a measurement value of a beam is greater than the second threshold.

12. The method according to claim 10, wherein
the fourth RA resource is determined based on at least one of the following:
randomly selected from an RA resource indicated by one resource set element comprised in the first resource set list;
randomly selected from an RA resource associated with a fifth beam; and
based on the third repetition transmission indication;
wherein the fifth beam is a first beam in the N first beams that meets a first condition, or is determined based on the target beam identifier; and
the first condition is that a measurement value of a beam is greater than the second threshold.

13. The method according to claim 3, wherein
the first RA resource is associated with N first beams, wherein N is a positive integer;
the first rule comprises at least one of the following:
if the second repetition transmission indication indicates a first beam mode, the UE selects at least a part of RA resources associated with one of the N first beams as a target RA resource; or
if the second repetition transmission indication indicates a second beam mode, the UE selects at least a part of RA resources associated with multiple first beams in the N first beams as the target RA resources;
wherein the first beam mode is: different times of repetition transmission are transmitted by using a same beam; or
the first beam mode is: different times of repetition transmission are transmitted by using different beams.

14. The method according to claim 1, wherein an RA resource configured in the configuration information is associated with at least one beam; and
the RA resource configured in the configuration information comprises at least one of the following:
a second beam resource associated with the at least one beam; and
a configuration parameter related to an RA procedure;
wherein the second beam resource comprises at least one of the following:
a repetition transmission count associated with each beam in the at least one beam;
a preamble resource associated with each beam;
an RO resource associated with each beam; and
a beam mode associated with each beam.

15. The method according to claim 1, wherein after the performing, by the UE, Msg1 repetition based on the configuration information, the method further comprises:
in a case in which the UE successfully completes the first RA procedure, sending, by the UE according to a repetition number of a first physical uplink shared channel PUSCH, the first PUSCH to the network side device, or reporting, by the UE, information about the first RA procedure to the network side device;
wherein the first RA procedure is a contention-free RA procedure with Msg1 repetition, and the information about the first RA procedure is used by the network side device to adjust a resource configuration corresponding to the first RA procedure; and
the first PUSCH is a PUSCH scheduled by a random access response RAR sent by the network side device.

16. The method according to claim 15, wherein the information about the first RA procedure is used to indicate at least one of the following:
whether a beam associated with the first RA resource comprises a beam whose measurement value is greater than a second threshold; and
an RA resource used by the UE in the first RA procedure;
wherein the second threshold is used for beam selection of the contention-free first RA procedure with Msg1 repetition.

17. A random access RA method, comprising:
sending, by a network side device, configuration information to a UE, wherein the configuration information is used to configure at least one of the following: a first RA resource corresponding to a contention-free first RA procedure with Msg1 repetition, and a second RA resource corresponding to a contention-based second RA procedure with Msg1 repetition;
wherein the configuration information is used by the UE to perform Msg1 repetition.

18. The method according to claim 17, wherein the configuration information comprises at least one of the following:
a resource selection threshold;
a first repetition transmission indication;
a second repetition transmission indication;
a first resource set list of the first RA resource;
a second resource set list of the second RA resource;
a third repetition transmission indication;
a total Msg1 repetition number; and
a target beam identifier;
wherein the resource selection threshold comprises at least one of the following: a first threshold and a second threshold;
the first threshold is used by the UE to determine whether to select the RA resource corresponding to the RA procedure based on Msg1 repetition;
the second threshold is used for beam selection in the first RA procedure;
the first repetition transmission indication is used to indicate to trigger the first RA procedure;
the second repetition transmission indication is used to indicate a Msg1 repetition beam mode;
each resource set list comprises at least one resource set element, and each resource set element indicates at least one RA resource in the first RA resource or the second RA resource;
the third repetition transmission indication is used to indicate a resource set element comprised in the first resource set list or the second resource set list; and
the target beam identifier is used to indicate a target beam, and the target beam is associated with one or more RA resources in the first RA resource or the second RA resource.

19. The method according to claim 17, wherein after the sending, by a network side device, configuration information to UE, the method further comprises:
receiving, by the network side device, a first PUSCH or information about the first RA procedure sent by the UE;
wherein the first RA procedure is a contention-free RA procedure with Msg1 repetition, and the information about the first RA procedure is used by the network side device to adjust a resource configuration corresponding to the first RA procedure; and
the first PUSCH is a PUSCH scheduled by an RAR sent by the network side device to the UE.

20. The method according to claim 19, wherein the information about the first RA procedure indicates at least one of the following:
whether a beam associated with the first RA resource comprises a beam whose measurement value is greater than a second threshold; and
an RA resource used by the UE in the first RA procedure;
wherein the second threshold is used for beam selection of the contention-free first RA procedure with Msg1 repetition.

21. A random access RA apparatus, comprising: a receiving module and an execution module;
wherein the receiving module is configured to receive configuration information sent by a network side device, wherein the configuration information is used to configure at least one of the following: an RA resource corresponding to an RA procedure with Msg1 repetition, and a second RA resource corresponding to a contention-based second RA procedure with Msg1 repetition; and
the execution module is configured to perform Msg1 repetition based on the configuration information received by the receiving module;
wherein a contention-free first RA procedure with Msg1 repetition is corresponding to a first RA resource.

22. The apparatus according to claim 21, wherein the configuration information comprises at least one of the following:
a resource selection threshold;
a first repetition transmission indication;
a second repetition transmission indication;
a first resource set list of the first RA resource;
a second resource set list of the second RA resource;
a third repetition transmission indication;
a total Msg1 repetition number; and
a target beam identifier;
wherein the resource selection threshold comprises at least one of the following: a first threshold and a second threshold;
the first threshold is used by the UE to determine whether to select the RA resource corresponding to the RA procedure based on Msg1 repetition;
the second threshold is used for beam selection in the first RA procedure;
the first repetition transmission indication is used to indicate to trigger the first RA procedure;
the second repetition transmission indication is used to indicate a Msg1 repetition beam mode;
each resource set list comprises at least one resource set element, and each resource set element indicates at least one RA resource in the first RA resource or the second RA resource;
the third repetition transmission indication is used to indicate a resource set element comprised in the first resource set list or the second resource set list; and
the target beam identifier is used to indicate a target beam, and the target beam is associated with one or more RA resources in the first RA resource or the second RA resource.

23. The apparatus according to claim 22, wherein
the execution module is specifically configured to perform Msg1 repetition based on the configuration information and a first rule.

24. The apparatus according to claim 23, wherein
the first RA resource is associated with N first beams, wherein N is a positive integer;
the second RA resource is associated with M second beams, wherein M is a positive integer; and
the first rule comprises at least one of the following:
if a measurement value corresponding to a downlink path loss reference is less than the first threshold, the UE considers that Msg1 repetition is applicable to a current RA procedure;
if the first RA resource and the second RA resource are configured in the configuration information, the UE selects all or a part of RA resources in the second RA resource as a candidate target RA resource; and
if a measurement value of at least one first beam of the N first beams is greater than the second threshold, the UE selects all or a part of RA resources associated with at least a part of the at least one first beam as a target RA resource;
wherein the target RA resource is used to perform Msg1 repetition.

25. The apparatus according to claim 24, wherein the candidate target RA resource is associated with at least one second beam of the M second beams; and
the first rule further comprises: if measurement values of the N first beams are all less than or equal to the second threshold, and the second RA resource is configured in the configuration information, the UE selects all or a part of RA resources associated with at least a part of the at least one second beam as the target RA resource.

26. The apparatus according to claim 25, wherein
the first rule comprises: if the measurement values of the N first beams are all less than or equal to the second threshold, and the second RA resource is configured in the configuration information, the UE selects all or a part of RA resources associated with at least a part of the at least one second beam as the target RA resource; and
the target RA resource is determined based on at least one of the following:
randomly selected from an RA resource indicated by a first resource set element; and
randomly selected from an RA resource associated with one second beam of the at least one second beam;
wherein the first resource set element is one element of the second resource set list, and the first resource set element indicates at least a part of RA resources in the candidate target RA resource.

27. The apparatus according to claim 24, wherein
the first rule further comprises at least one of the following:
if a beam mode associated with a third beam is a first beam mode, the UE selects all or a part of RA resources associated with the third beam as the target RA resource; or
if a beam mode associated with a third beam is a second beam mode, the UE selects a part of RA resources associated with the third beam and a part of RA resources associated with at least one fourth beam as the target RA resource;
wherein the third beam is one of the N first beams;
the fourth beam is at least one of the N first beams; and
the first beam mode is: different times of repetition transmission are transmitted by using a same beam; or
the first beam mode is: different times of repetition transmission are transmitted by using different beams.

28. The apparatus according to claim 27, wherein
the third beam is determined based on at least one of the following:
randomly selected from the N first beams; and
randomly selected from a fifth beam;
wherein the fifth beam is a first beam in the N first beams that meets a first condition; and
the first condition is that a measurement value of a beam is greater than the second threshold.

29. The apparatus according to claim 27, wherein
the fourth beam is determined based on at least one of the following:
randomly selected from the N first beams;
randomly selected from a fifth beam;
based on the total Msg1 repetition number;
based on the third beam; and
based on a first beam resource associated with the third beam;
wherein the fifth beam is a first beam in the N first beams that meets a first condition; and
the first condition is that a measurement value of a beam is greater than the second threshold; and
the first beam resource comprises at least one of the following:
a repetition transmission count associated with the third beam;
a preamble resource associated with the third beam; and
a random access occasion RO resource associated with the third beam.

30. The apparatus according to claim 23, wherein
the first rule further comprises at least one of the following:
if the first repetition transmission indication is configured in the configuration information, the UE uses a third RA resource in the first RA resource as a target RA resource; or
if the first resource set list is configured in the configuration information, the UE uses a fourth RA resource in the first RA resource as a target RA resource.

31. The apparatus according to claim 30, wherein the third RA resource is determined based on at least one of the following:
randomly selected from RA resources associated with the N first beams; and
randomly selected from an RA resource associated with a fifth beam;
wherein the fifth beam is a first beam in the N first beams that meets a first condition, or is determined based on the target beam identifier; and
the first condition is that a measurement value of a beam is greater than the second threshold.

32. The apparatus according to claim 30, wherein
the fourth RA resource is determined based on at least one of the following:
randomly selected from an RA resource indicated by one resource set element comprised in the first resource set list;
randomly selected from an RA resource associated with a fifth beam; and
based on the third repetition transmission indication;
wherein the fifth beam is a first beam in the N first beams that meets a first condition, or is determined based on the target beam identifier; and
the first condition is that a measurement value of a beam is greater than the second threshold.

33. The apparatus according to claim 23, wherein
the first RA resource is associated with N first beams, wherein N is a positive integer;
the first rule comprises at least one of the following:
if the second repetition transmission indication indicates a first beam mode, the UE selects at least a part of RA resources associated with one of the N first beams as a target RA resource; or
if the second repetition transmission indication indicates a second beam mode, the UE selects at least a part of RA resources associated with multiple first beams in the N first beams as the target RA resources;
wherein the first beam mode is: different times of repetition transmission are transmitted by using a same beam; or
the first beam mode is: different times of repetition transmission are transmitted by using different beams.

34. The apparatus according to claim 21, wherein an RA resource configured in the configuration information is associated with at least one beam; and
the RA resource configured in the configuration information comprises at least one of the following:
a second beam resource associated with the at least one beam; and
a configuration parameter related to an RA procedure;
wherein the second beam resource comprises at least one of the following:
a repetition transmission count associated with each beam in the at least one beam;
a preamble resource associated with each beam;
an RO resource associated with each beam; and
a beam mode associated with each beam.

35. The apparatus according to claim 21, wherein the apparatus further comprises a sending module; and
the sending module is configured to: after the execution module performs Msg1 repetition based on the configuration information, in a case in which the UE successfully completes the first RA procedure, send a first PUSCH to the network side device according to a repetition number of the first PUSCH, or report information about the first RA procedure to the network side device;
wherein the first RA procedure is a contention-free RA procedure with Msg1 repetition, and the information about the first RA procedure is used by the network side device to adjust a resource configuration corresponding to the first RA procedure; and
the first PUSCH is a PUSCH scheduled by a random access response RAR sent by the network side device.

36. The apparatus according to claim 35, wherein the information about the first RA procedure is used to indicate at least one of the following:
whether a beam associated with the first RA resource comprises a beam whose measurement value is greater than a second threshold; and
an RA resource used by the UE in the first RA procedure;
wherein the second threshold is used for beam selection of the contention-free first RA procedure with Msg1 repetition.

37. An RA apparatus, comprising: a sending module;
wherein the sending module is configured to send configuration information to UE, wherein the configuration information is used to configure at least one of the following: a first RA resource corresponding to a contention-free first RA procedure with Msg1 repetition, and a second RA resource corresponding to a contention-based second RA procedure with Msg1 repetition;
wherein the configuration information is used by the UE to perform Msg1 repetition.

38. The apparatus according to claim 37, wherein the RA apparatus further comprises: a receiving module; and
the receiving module is configured to: after the sending module sends the configuration information to the UE, receive a first PUSCH or information about the first RA procedure sent by the UE;
wherein the first RA procedure is a contention-free RA procedure with Msg1 repetition, and the information about the first RA procedure is used by the RA apparatus to adjust a resource configuration corresponding to the first RA procedure; and
the first PUSCH is a PUSCH scheduled by an RAR sent by the RA apparatus to the UE.

39. A UE, comprising a processor and a memory, wherein the memory stores a program or instructions capable of running on the processor, and the program or the instructions are executed by the processor to implement the steps of the RA method according to any one of claims 1 to 16.

40. A network side device, comprising a processor and a memory, wherein the memory stores a program or instructions capable of running on the processor, and the program or the instructions are executed by the processor to implement the steps of the RA method according to any one of claims 17 to 20.

41. A communication system, wherein the communication system comprises the RA apparatus according to any one of claims 21 to 36 and the RA apparatus according to claim 37 or 38; or the communication system comprises the UE according to claim 39 and the network side device according to claim 40.

42. A readable storage medium, wherein a program or instructions are stored on the readable storage medium, and the program or instructions are executed by a processor to implement the RA method according to any one of claims 1 to 16, or to implement the steps of the RA method according to any one of claims 17 to 20.
